# EUROPÄISCHE PATENTSCHRIFT

(11) **EP 3 534 210 B1**
(45) Veröffentlichungstag und Bekanntmachung des Hinweises auf die Patenterteilung: **14.12.2022**
(21) Anmeldenummer: 19154156.4
(22) Anmeldetag: 29.01.2019
(51) Int. Cl.: G03B 13/30, H04N 5/232, G02B 7/28, G03B 13/36

(54) **FOKUSEINSTELLUNGS-ANZEIGEEINHEIT**
FOCUS ADJUSTMENT DISPLAY UNIT
UNITÉ D'AFFICHAGE À RÉGLAGE DU FOYER

(30) Priorität: 12.02.2018 DE 102018103092
(43) Veröffentlichungstag der Anmeldung: 04.09.2019
(73) Patentinhaber: Arnold & Richter Cine Technik GmbH & Co. Betriebs KG, 80807 München (DE)
(72) Erfinder: Voss, Hendrik, 81673 München (DE)
(74) Vertreter: Manitz Finsterwald Patent- und Rechtsanwaltspartnerschaft mbB

(56) Entgegenhaltungen:
- EP-A1- 2 947 510
- WO-A1-2012/126868
- DE-A1- 10 150 171
- Jon Fauer: "Preston Light Ranger 2", Film and Digital Times, 1. Juni 2014 (2014-06-01), XP055176332, Gefunden im Internet: URL:http://www.filmanddigitaltimes.com/wp- content/uploads/2014/05/61FDTimes-PrestonL R2.pdf [gefunden am 2015-03-13]

## Beschreibung

Die vorliegende Erfindung betrifft gemäß Anspruch 1 eine Fokuseinstellungs-Anzeigeeinheit für eine Bewegtbildkamera, gemäß Anspruch 11 ein Fokuseinstellungs-System für eine Bewegtbildkamera, gemäß Anspruch 13 ein Verfahren zur Vereinfachung des Fokussierens einer Bewegtbildkamera, sowie gemäß Anspruch 14 ein Verfahren zum Fokussieren einer Bewegtbildkamera.

Eine Fokuseinstellungs-Anzeigeeinheit nach dem Oberbegriff des Anspruchs 1 wird beispielsweise in EP 2 947 510 A1 sowie in Jon Fauer: "Preston Light Ranger 2", Film and Digital Times, Issue 61, offenbart. In WO 2012/126868 A1 werden ein Verfahren und eine Vorrichtung zum Fokussieren einer Filmkamera beschrieben, bei denen mittels einer Hilfskamera eine Hilfsdarstellung eines aufzunehmenden Objekts erzeugt wird, aus welcher eine gewünschte Fokuseinstellung bestimmt und als Fokussignal an die Filmkamera ausgegeben wird. DE 100 50 171 A1 offenbart eine Autofokuseinrichtung, die eine TTL-Fokusdetektoreinrichtung sowie einen Entfernungsmesser umfasst, dessen Entfernungsmesswerte mittels einer Umwandlungskennlinie in eine einzustellende Objektivposition umgewandelt werden.

Insbesondere bei der professionellen Nutzung von Bewegtbildkameras, beispielsweise im Rahmen von Produktionen für die Kinoleinwand, erfolgt die Fokussierung eines Objektivs der Bewegtbildkamera typischerweise nicht vollautomatisch, sondern für eine präzise Kontrolle des Schärfebereichs des aufgezeichneten Bewegtbilds zumindest weitgehend manuell. Das liegt daran, dass oftmals nicht alle Abstandsebenen der im Blickfeld des Objektivs befindlichen und mittels der Bewegtbildkamera erfassten Szenerie scharf abgebildet werden sollen, sondern zur Lenkung der Aufmerksamkeit des Betrachters auf einen bestimmten Bereich oder auch als künstlerisches Stilmittel ein scharf abgebildeter Abstandsbereich gegenüber einem unscharfen Vorder- und/oder Hintergrund herausgestellt wird.

Für das Scharfstellen eines Objektes muss sich dessen Oberfläche nicht exakt in einer der momentanen Fokusentfernung des Objektivs entsprechenden Objektebene befinden, da auch der Inhalt eines gewissen Abstandsbereichs, der die Objektebene sowie Bereiche davor und dahinter umfasst, vom Objektiv scharf auf einen Film bzw. auf einen Bildsensor der Bewegtbildkamera abgebildet wird. Die Ausdehnung dieses als Fokusbereich oder auch Schärfentiefe bezeichneten Abstandsbereichs entlang der optischen Achse hängt insbesondere von der momentanen Blendenzahl des Objektivs ab.

Je schmaler der Fokusbereich ist, desto präziser muss die Fokussierung, d.h. die Anpassung der Fokusentfernung des Objektivs an den Abstand eines oder mehrerer scharf abzubildender Objekte der jeweiligen Szenerie, erfolgen, um sicherzustellen, dass die Objekte während einer Aufnahme im Fokusbereich des Objektivs liegen. Verändern die scharf abzubildenden Objekte während der Aufnahme ihren Abstand von der Bewegtbildkamera, muss ferner die Fokusentfernung präzise nachgeführt, also kontinuierlich an den sich ändernden Abstand angepasst, werden. In professionellen Filmproduktionen wird die Aufgabe des Scharfstellens des Objektivs, die auch als Schärfeziehen bezeichnet wird, daher in der Regel nicht von dem Kameramann selbst, sondern von dem ersten Kameraassistenten bzw. von einem speziell für das Schärfeziehen zuständigen sogenannten Focus Puller ausgeführt.

Für ein präzises Fokussieren ist es hilfreich, wenn die dafür zuständige Person eine Möglichkeit hat, die momentane Fokuseinstellung, d.h. insbesondere die Fokusentfernung, vorzugsweise aber auch den Fokusbereich, in Bezug auf die zu erfassende Szenerie und die scharfzustellenden Objekte der Szenerie zu überprüfen. Das kann z.B. anhand einer Skala erfolgen, die auf oder neben einem für das Verstellen der Fokusentfernung betätigten Drehknopf aufgedruckt ist und an der die momentane Fokusentfernung abgelesen werden kann, oder anhand einer Anzeige, welche die momentane Fokusentfernung als Zahlenwert anzeigt. Zudem können spezielle Fokusentfernungen, die im Laufe einer Aufnahme eingestellt werden sollen, vorab geprobt und durch setzbare Marker am Drehknopf oder der Anzeige markiert werden, so dass sie während der Aufnahme als Referenz herangezogen werden können. Grundsätzlich ist er ferner denkbar, dass die Fokuseinstellung auf einem Monitorbild der laufenden Aufnahme geprüft wird. Ein solches Monitorbild steht der für das Fokussieren zuständigen Person jedoch nicht immer zur Verfügung oder weist keine für eine zuverlässige Überprüfung der Fokuseinstellung hinreichende Auflösung auf.

Es sind Fokuseinstellungs-Hilfen bekannt, die während der laufenden Aufnahme direkt in den erfassten Bewegtbildern scharf abgebildete Bereiche identifizieren und in einem Monitorbild der laufenden Aufnahme auf spezielle Weise kennzeichnen. Dadurch wird aber das eigentliche Monitorbild überlagert, was unerwünscht sein kann. Zudem sind das Identifizieren der scharf abgebildeten Bereiche sowie die Darstellung der Schärfeinformation im Monitorbild vergleichsweise komplex. Darüber hinaus ist eine solche Vorrichtung nicht geeignet, die Fokussierung zu unterstützen, wenn das Monitorbild nicht zur Verfügung steht. Es sind auch Fokuseinstellungs-Hilfen bekannt, welche den Abstand eines Objekts der aufzuzeichnenden Szenerie, das von den Objekten der Szenerie der Bewegtbildkamera am nächsten ist, erfassen und einen entsprechenden Abstandswert anzeigen. Für eine komplexe Szenerie, die mehrere Objekte in vielen verschiedenen Abständen von der Bewegtbildkamera umfasst, ist ein solches System aber unzureichend, insbesondere wenn die Fokussierung zwischen mehreren Objekten verstellt werden soll.

Es ist eine Aufgabe der Erfindung, eine Fokuseinstellungs-Anzeigeeinheit für eine Bewegtbildkamera, ein Fokuseinstellungs-System für eine Bewegtbildkamera, ein Verfahren zur Vereinfachung des Fokussierens einer Bewegtbildkamera sowie ein Verfahren zum Fokussieren einer Bewegtbildkamera bereitzustellen, die eine zuverlässige, zugleich aber intuitive und komfortable Hilfestellung bei der Fokussierung einer Bewegtbildkamera bieten.

Die Aufgabe wird gelöst durch eine Fokuseinstellungs-Anzeigeeinheit für eine Bewegtbildkamera nach Anspruch 1, ein Fokuseinstellungs-System für eine Bewegtbildkamera nach Anspruch 11, ein Verfahren zur Vereinfachung des Fokussierens einer Bewegtbildkamera nach Anspruch 13 sowie ein Verfahren zum Fokussieren einer Bewegtbildkamera nach Anspruch 14.

Vorteilhafte Ausführungsformen der Erfindung ergeben sich aus den abhängigen Ansprüchen, der vorliegenden Beschreibung sowie den Figuren.

Gemäß Anspruch 1 weist die Fokuseinstellungs-Anzeigeeinheit für eine Bewegtbildkamera zumindest einen Dateneingang, eine Anzeigevorrichtung sowie eine Steuervorrichtung auf.

Der Dateneingang gemäß Anspruch 1 ist dazu ausgebildet, eine Fokuseinstellung zu empfangen, welche eine momentane Fokusentfernung eines Objektivs der Bewegtbildkamera repräsentiert. Dabei kann die über den Dateneingang empfangene Fokuseinstellung neben der momentanen Fokusentfernung auch weitere Informationen umfassen und insbesondere auch den momentanen Fokusbereich des Objektivs repräsentieren. Die Fokuseinstellung wird vorzugsweise direkt oder über die Bewegtbildkamera aus dem Objektiv ausgelesen, das dazu einen entsprechenden Datenausgang bzw. eine entsprechende Schnittstelle aufweisen kann. Wenn die Fokuseinstellungs-Anzeigeeinheit nicht nur Mittel zum Anzeigen, sondern auch zum

Verstellen der Fokuseinstellung aufweist, wie nachfolgend noch beschrieben wird, kann es sich bei der empfangenen Fokuseinstellung grundsätzlich auch lediglich um einen Sollwert der Fokuseinstellung handeln, der beispielsweise von einem Bedienelement der Fokuseinstellungs-Anzeigeeinheit über einen internen Dateneingang empfangen wird.

Der Dateneingang der Fokuseinstellungs-Anzeigeeinheit gemäß Anspruch 1 ist ferner dazu ausgebildet, Abstandwerte zu empfangen, welche die Abstände einer Vielzahl von Szeneriepunkten im Blickfeld des Objektivs von der Bewegtbildkamera repräsentieren. Bei den Szeneriepunkten handelt es sich insbesondere um Punkte auf Oberflächen von Objekten einer aufzuzeichnenden bzw. momentan aufgezeichneten Szenerie. Diese Punkte sind vorzugsweise regelmäßig über das Blickfeld des Objektivs verteilt angeordnet. Beispielsweise können die Punkte gemäß einem definierten Raster verteilt sein, insbesondere mit, z.B. in horizontaler und vertikaler Richtung, regelmäßigen Winkelabständen zwischen benachbarten Punkten bezogen auf den Blickwinkel, unter dem die Szeneriepunkte vom Objektiv aus oder von einem in der Nähe des Objektivs angeordneten Entfernungssensor aus erscheinen. Für das Empfangen der Fokuseinstellung und für das Empfangen der Abstandswerte kann als Dateneingang ein gemeinsamer Anschluss vorgesehen sein. Grundsätzlich kann der Dateneingang aber auch aufgeteilt sein und zwei oder mehr verschiedene Anschlüsse umfassen.

Bei den Abständen der Szeneriepunkte von der Bewegtbildkamera kann es sich grundsätzlich um einen zu einem Bezugspunkt der Bewegtbildkamera radialen Abstand im Sinne der Länge der geradlinigen Strecke zwischen einem jeweiligen Szeneriepunkt und diesem Bezugspunkt handeln. Vorzugsweise sind die genannten Abstände der Szeneriepunkte von der Bewegtbildkamera aber ausschließlich auf den entlang der optischen Achse des Objektivs verlaufenden Richtungsanteil beschränkt zu verstehen. Insofern kann es sich bei dem Abstand eines jeweiligen Szeneriepunkts von der Bewegtbildkamera um den Abstand des Szeneriepunkts von einer Bezugsebene der Bewegtbildkamera bzw. des Objektivs handeln. Diese Bezugsebene kann insbesondere einer mit der Lage des Films oder des Bildsensors der Bewegtbildkamera zusammenfallenden Bildebene oder einer anderen charakteristischen Ebene des Objektivs, z.B. der Hauptebene des Objektivs, entsprechen.

Die senkrecht zu dieser Bezugsebene definierte Raumrichtung wird üblicherweise als Tiefe bezeichnet. Da durch ein Objektiv in der Regel zumindest idealerweise eine zu dieser Raumrichtung senkrechte Objektebene scharf abgebildet wird, ist auch die Fokusentfernung des Objektivs auf diese Raumrichtung bezogen zu verstehen. Wird zur Messung der Abstände der Szeneriepunkte von der Bewegtbildkamera ein Entfernungssensor benutzt, der typischerweise radiale Abstände misst, kann es erforderlich sein, die radialen Abstände jeweils zunächst, etwa anhand zusätzlich erfasster Blickwinkelinformation, in die entsprechende Tiefe umzurechnen, bevor entsprechende Abstandswerte an den Dateneingang der Fokuseinstellungs-Anzeigeeinheit ausgegeben werden.

Sofern im Zusammenhang mit der Erfindung auf die Fokusentfernung des Objektivs Bezug genommen wird, so ist hierunter insbesondere eine Entfernung zwischen der Objektebene und der Bildebene des Objektivs oder ein hiermit eindeutig korrelierter Entfernungswert zu verstehen.

Die Anzeigevorrichtung der erfindungsgemäßen Fokuseinstellungs-Anzeigeeinheit kann insbesondere eine elektronische Anzeigefläche mit einer zweidimensionalen Matrix von Bildpunkten umfassen, die individuell angesteuert werden können, um insgesamt auf der Anzeigefläche verschiedenartige Bildinformation wiederzugeben. Bei der Anzeigefläche handelt es sich beispielsweise um einen LCD-, TFT-, OLED- oder auf einer vergleichbaren Technik basierenden Bildschirm. Auf diese Weise können neben Buchstaben und Ziffern auch graphische Darstellungen im Wesentlichen beliebiger Art, z.B. Linien, Kurven, Flächen und Symbole, separat voneinander oder in Überlagerung, in verschiedenen räumlichen Beziehungen zueinander, die sich auch verändern können, angezeigt werden.

Die Auswerte- und Steuervorrichtung gemäß Anspruch 1 ist dazu ausgebildet, die Anzeigevorrichtung dazu anzusteuern, eine graphische Darstellung der Fokuseinstellung sowie eine graphische Darstellung einer Häufigkeitsverteilung der Abstandswerte in einer räumlichen Beziehung zueinander anzuzeigen, welche das räumliche Verhältnis der momentanen Fokusentfernung des Objektivs zu den Abständen der Vielzahl von Szeneriepunkten wiederspiegelt. Vorzugsweise ist die räumliche Beziehung derart, dass eine Übereinstimmung der Fokusentfernung des Objektivs mit einem bestimmten Abstandwert anhand der genannten räumlichen Beziehung unmittelbar intuitiv erkannt werden kann. Das kann beispielsweise dadurch erreicht werden, dass im Fall einer solchen Übereinstimmung die graphische Darstellung der Fokusentfernung und der dem Abstandswert entsprechende Teil oder Punkt der graphischen Darstellung der Häufigkeitsverteilung auf der Anzeigevorrichtung koinzidieren.

Als graphische Darstellung der Fokuseinstellung kann die momentane Fokusentfernung zusammen mit dem momentanen Fokusbereich des Objektivs der Bewegtbildkamera graphisch dargestellt werden. Da der Fokusbereich stets die Fokusentfernung einschließt, kann der Fokusbereich als die Fokusentfernung durch ihre Varianz repräsentierend angesehen werden. Insofern kann das Anzeigen der graphischen Darstellung der Fokuseinstellung auch lediglich umfassen, dass der momentane Fokusbereich graphisch dargestellt wird. Denn für eine Unterstützung der Fokussierung kann es ausreichen, wenn als graphische Darstellung der Fokuseinstellung lediglich entweder die momentane Fokusentfernung oder der momentane Fokusbereich graphisch dargestellt wird.

Die momentane Fokusentfernung kann beispielsweise durch einen Strich, ein Symbol oder einen Marker graphisch dargestellt werden. Grundsätzlich kann dabei die Fokusentfernung auch als Zahlenwert angezeigt werden. Die Position der jeweiligen graphischen Darstellung auf der Anzeigeeinheit, insbesondere auf einer Anzeigefläche der Anzeigeeinheit, kann von dem Wert der momentanen Fokusentfernung abhängen, so dass sie sich bei einem Verstellen der Fokusentfernung ändert. Der momentane Fokusbereich kann beispielsweise als ein Strich, ein Balken oder eine Fläche graphisch dargestellt werden, dessen/deren Ausdehnung der Tiefe des momentanen Fokusbereichs entspricht. Alternativ oder zusätzlich können auch lediglich die Begrenzungen des momentanen Fokusbereichs, d.h. seine minimale und seine maximale Tiefe, graphisch dargestellt werden. Dabei können sich die Position und die Ausdehnung der graphischen Darstellung des momentanen Fokusbereichs in Abhängigkeit von Änderungen des Fokusbereichs ändern. Grundsätzlich können die graphische Darstellung der momentanen Fokusentfernung und/oder des momentanen Fokusbereichs aber auch positionsfest sein, wobei dann Änderungen der momentanen Fokusentfernung bzw. des momentanen Fokusbereichs beispielsweise durch das Verschieben einer Skala wiedergespiegelt werden können, relativ zu welcher die jeweilige graphische Darstellung angezeigt wird.

Sofern die momentane Fokusentfernung und der momentane Fokusbereich gemeinsam graphisch dargestellt werden, ist die graphische Darstellung des Fokusbereichs vorzugsweise relativ zu der graphischen Darstellung der Fokusentfernung in einer Weise angeordnet, durch die wiedergespiegelt wird, in welcher Weise der momentane Fokusbereich die momentane Fokusentfernung umgibt. Dazu werden der Fokusbereich und die Fokusentfernung beispielsweise über einer gemeinsamen Achse aufgetragen dargestellt, durch welche die jeweilige Tiefe in Bezug zur Bewegtbildkamera angegeben wird, wobei diese Achse selbst aber nicht graphisch dargestellt sein muss.

Die graphische Darstellung der Häufigkeitsverteilung der Abstandswerte der Vielzahl von Szeneriepunkten kann beispielsweise in Form einer oder mehrerer Kurven anzeigt werden, die vorzugsweise ebenfalls über einer Achse als Abszisse aufgetragen sind, durch welche die jeweilige Tiefe in Bezug zur Bewegtbildkamera angegeben wird, wobei auch diese Achse selbst nicht graphisch dargestellt sein muss. Die Richtung der zu dieser Achse senkrechten Ordinate entspricht dann der Häufigkeit eines jeweiligen Abstandswerts. Die Darstellung könnte somit der eines Histogramms entsprechen.

Bewegen sich Objekte im Blickfeld des Objektivs in Bezug auf ihren Abstand zur Bewegtbildkamera, verändert sich die Häufigkeitsverteilung der Abstandswerte und somit auch die graphische Darstellung dieser Häufigkeitsverteilung. Ist die Anzahl der Szeneriepunkte, deren Abstandswerte vorliegen, hinreichend groß bzw. die Verteilung der Szeneriepunkte über das Blickfeld des Objektivs hinreichend fein, können solche Bewegungen von Objekten zur Wanderung von Maxima der Häufigkeitsverteilung führen. Wird die Häufigkeitsverteilung als Kurve angezeigt, verschieben sich dabei die Positionen von Bergen der Kurve. Anhand solcher Veränderungen der graphischen Darstellung der Häufigkeitsverteilung der Abstandswerte können Änderungen des Abstands einzelner Objekte von der Bewegtbildkamera auf intuitive Weise einfach erkannt werden.

Da die genannte räumliche Beziehung der graphischen Darstellung der Fokuseinstellung und der graphischen Darstellung der Häufigkeitsverteilung der Abstandswerte das räumliche Verhältnis der momentanen Fokusentfernung des Objektivs zu den Abständen der Vielzahl von Szeneriepunkten wiederspiegelt, ändert sich immer dann, wenn sich die Fokusentfernung oder die Abstände ändern, auch die räumliche Beziehung der graphischen Darstellungen auf der Anzeigevorrichtung. Auf diese Weise erhält die für die Fokussierung der Bewegtbildkamera zuständige Person einerseits eine visuelle Rückmeldung über das Verstellen der Fokusentfernung und anderseits jeweils aktuelle Informationen darüber, wo (bezogen auf die Tiefe) relativ zur momentanen Fokusentfernung wie viele der erfassten Szeneriepunkte liegen. Das ermöglicht eine einfache, insbesondere intuitive und komfortable, fortlaufende Anpassung der Fokusentfernung an sich bewegende Objekte sowie ein ebenso einfaches Verstellen der Fokusentfernung für einen Wechsel des zu fokussierenden Objekts.

Infolge eines Verstellens der Fokusentfernung verändert sich die räumliche Beziehung der graphischen Darstellung der Fokuseinstellung und der graphischen Darstellung der Häufigkeitsverteilung der Abstandswerte. Dafür müssen aber nicht zwangsläufig beide graphischen Darstellungen ihre Position auf der Anzeigevorrichtung ändern, da sich die räumliche Beziehung auch dann verändert, wenn zumindest eine der beiden graphischen Darstellungen bewegt wird. Daher kann beispielsweise vorgesehen sein, dass eine der beiden graphischen Darstellungen grundsätzlich positionsfest ist. Insbesondere kann die graphische Darstellung der Fokuseinstellung selbst bei einem Verstellen der Fokusentfernung zumindest hinsichtlich ihrer Position oder auch insgesamt (gegebenenfalls abgesehen von einem angezeigten Zahlenwert der momentanen Fokusentfernung) unverändert bleiben, wenn sich stattdessen die graphische Darstellung der Häufigkeitsverteilung der Abstandswerte hinsichtlich ihrer Position so verändert, dass die räumliche Beziehung der beiden graphischen Darstellungen weiterhin das räumliche Verhältnis der (veränderten) Fokusentfernung des Objektivs zu den Abständen der Vielzahl von Szeneriepunkten wiederspiegelt.

Die Fokuseinstellungs-Anzeigeeinheit (oder Fokuseinstellungs-Anzeige- und -steuereinheit) kann insbesondere als mobile, d.h. tragbare, Handeinheit ausgebildet sein. Diese Handeinheit kann für eine kabelgebundene und/oder für eine funkbasierte Verbindung mit der Bewegtbildkamera oder einem daran angeschlossenen Zubehör ausgelegt sein.

Gemäß einer vorteilhaften Ausführungsform ist die Auswerte- und Steuervorrichtung dazu ausgebildet, die Anzeigevorrichtung dazu anzusteuern, für das Anzeigen der graphischen Darstellung der Fokuseinstellung sowie der graphischen Darstellung der Häufigkeitsverteilung der Abstandswerte die Fokuseinstellung und die Häufigkeitsverteilung über einer gemeinsamen Achse aufgetragen darzustellen. Diese gemeinsame Achse gibt insbesondere die Tiefe in Bezug zu der Bewegtbildkamera an, entspricht also dem Abstand von einer Bezugsebene der Bewegtbildkamera. Falls die Fokuseinstellung, insbesondere die Fokusentfernung bzw. der Fokusbereich, und die Abstände der Szeneriepunkte von der Bewegtbildkamera relativ zu unterschiedlichen Bezugsebenen definiert sind, kann zunächst eine Umrechnung auf einen gemeinsamen Nullpunkt der gemeinsame Achse erforderlich sein. Allerdings brauchen weder der Nullpunkt oder eine Skala der gemeinsame Achse noch die gemeinsame Achse selbst angezeigt zu werden, da es für ein vereinfachtes Fokussieren ausreichen kann, wenn die für das Fokussieren zuständige Person die räumliche Beziehung der graphischen Darstellung der Fokuseinstellung und der graphischen Darstellung der Häufigkeitsverteilung der Abstandswerte visuell erfassen kann, ohne dass es erforderlich wäre, auch absolute Werte ablesen zu können. Gleichwohl kann die gemeinsame Achse gegebenenfalls mit einer Skala angezeigt werden. Absolute Werte, z.B. der momentanen Fokusentfernung und/oder charakteristischer Punkte der Häufigkeitsverteilung können zudem ergänzend als Zahlenwerte angezeigt werden.

Dass eine graphische Darstellung "über" einer Achse aufgetragen wird, ist dabei nicht als Angabe einer Raumrichtung im Sinne von "oberhalb" zu verstehen. Vielmehr ist lediglich gemeint, dass durch die (gemeinsame) Achse eine (gemeinsame) Referenz für die Skalierung und Position der jeweiligen Darstellung entlang der Achse vorgegeben wird. Eine Änderung der räumlichen Beziehung der graphischen Darstellung der Fokuseinstellung und der graphischen Darstellung der Häufigkeitsverteilung der Abstandswerte entspricht somit insbesondere einem Verschieben der graphischen Darstellungen relativ zueinander in einer zu der gemeinsamen Achse parallelen Richtung.

Die gemeinsame Achse kann auf der Anzeigevorrichtung horizontal, vertikal oder in sonstiger Weise ausgerichtet sein. Vorzugsweise ist die gemeinsame Achse derart ausgerichtet, dass sie parallel zu einer Verstellrichtung eines Bedienelements zum Verstellen der Fokusentfernung angeordnet ist oder angeordnet werden kann. Wenn das Verstellen des Bedienelements um eine Drehachse erfolgt, ist die gemeinsame Achse vorzugsweise tangential zu einem Kreis um die Drehachse oder, wenn die Anzeigevorrichtung eine entsprechend gebogene Anzeigefläche aufweist, in Umlaufrichtung um die Drehachse angeordnet.

Die gemeinsame Achse braucht ferner nicht linear zu sein, sondern kann beispielsweise auch logarithmisch, exponentiell oder auf sonstige Weise skaliert sein. Außerdem kann die gemeinsame Achse bereichsweise, insbesondere in einem Bereich von Interesse, eine gegenüber umgebenden Bereichen vergrößerte Skalierung aufweisen. Das ermöglicht es, insbesondere auch auf kleinen Anzeigevorrichtungen einen besonders relevanten Teil der graphischen Darstellungen mit verbesserter Auflösung anzuzeigen. Der Bereich von Interesse, der mit vergrößerter Skalierung angezeigt wird, verändert sich dabei vorzugsweise dynamisch, nämlich derart, dass er die momentane Fokusentfernung insbesondere symmetrisch umgibt und bevorzugt auch den momentanen Fokusbereich jeweils vollständig umfasst.

Gemäß einer vorteilhaften Ausführungsform ist die Auswerte- und Steuervorrichtung dazu ausgebildet, die Häufigkeitsverteilung der Abstandswerte als einheitliche Häufigkeitsverteilung zu ermitteln, indem jedem Abstandsbereich einer Reihe aufeinanderfolgender Abstandsbereiche als Häufigkeit die Anzahl aller in diesen Abstandsbereich fallenden Abstandswerte zugeordnet wird. Bei einer solchen Ausführungsform ist die Auswerte- und Steuervorrichtung vorzugsweise ferner dazu ausgebildet, die Anzeigevorrichtung dazu anzusteuern, für das Anzeigen der graphischen Darstellung der Häufigkeitsverteilung die einem jeweiligen Abstandbereich zugeordnete Häufigkeit über diesem Abstandsbereich aufzutragen.

Die Reihe aufeinanderfolgender Abstandbereiche erstreckt sich vorzugsweise über alle empfangenen Abstandswerte, so dass jeder Abstandswert einem der Abstandsbereiche eindeutig zugeordnet werden kann. Die Abstandsbereiche weisen vorzugsweise alle dieselbe Ausdehnung auf. Die Ausdehnung muss aber nicht für alle Abstandsbereiche identisch sein, sondern kann beispielsweise desto größer sein, je weiter der Abstandsbereich von der Bewegtbildkamera entfernt ist. Das kann beispielsweise nützlich sein, um einer mit zunehmender Entfernung abnehmenden Genauigkeit eines Entfernungssensors Rechnung zu tragen. Außerdem kann die Häufigkeitsverteilung auch deshalb eine mit zunehmendem Abstand zur Bewegtbildkamera abnehmende Auflösung aufweisen, da mit zunehmender Fokusentfernung der Fokusbereich größer wird und die Fokussierung daher mit geringerer Genauigkeit erfolgen kann.

Die Anzahl der in einen jeweiligen Abstandsbereich fallenden Abstandwerte, die diesem Abstandswert als Häufigkeit zugeordnet wird, kann gemittelt bzw. durch einen Faktor normiert sein. Wenn die Abstandsbereiche keine konstante Ausdehnung aufweisen, ist dieser Faktor vorzugsweise ebenfalls nicht konstant, sondern insbesondere invers zur jeweiligen Ausdehnung des Abstandsbereichs, um den Einfluss der Ausdehnung des Abstandsbereichs auf die jeweilige Häufigkeit zu kompensieren.

Das Ermitteln der Häufigkeitsverteilung kann ferner umfassen, dass im Anschluss an das Zuordnen der einzelnen Häufigkeiten zu den Abstandsbereichen noch Rundungen oder Filterungen erfolgen. Das kann dazu dienen, die Verteilung zu glätten oder auch Bereiche mit sehr geringen Häufigkeiten, die beispielsweise unterhalb eines definierten Schwellenwerts liegen und somit Hintergrundrauschen darstellen, auszublenden, etwa indem die Häufigkeiten solcher Bereiche auf null gesetzt werden.

In grundsätzlich ähnlicher Weise kann anstelle einer einheitlichen Häufigkeitsverteilung auch eine blickfeldabschnittsspezifische Häufigkeitsverteilung ermittelt werden. Dementsprechend ist die Auswerte- und Steuervorrichtung gemäß einer weiteren vorteilhaften Ausführungsform dazu ausgebildet, die Häufigkeitsverteilung der Abstandswerte als blickfeldabschnittsspezifische Häufigkeitsverteilung zu ermitteln, indem das Blickfeld des Objektivs in Abschnitte aufgeteilt wird und jeder Kombination eines der Abschnitte mit einem Abstandsbereich einer Reihe aufeinanderfolgender Abstandsbereiche als Häufigkeit die Anzahl derjenigen in diesen Abstandsbereich fallenden Abstandswerte zugeordnet wird, welche den Abstand eines in dem jeweiligen Abschnitt liegenden Szeneriepunktes von der Bewegtbildkamera repräsentieren. Diese Aufteilung des Blickfelds des Objektivs kann insbesondere auch eine Aufteilung des Blickfelds eines zur Messung der Abstände vorgesehenen Entfernungssensors umfassen, wobei dieses Blickfeld des Entfernungssensors vorzugsweise (zumindest im Wesentlichen) dem Blickfeld des Objektivs entspricht.

Bei einer solchen Ausführungsform ist die Auswerte- und Steuervorrichtung dementsprechend vorzugsweise ferner dazu ausgebildet, die Anzeigevorrichtung dazu anzusteuern, für das Anzeigen der graphischen Darstellung der Häufigkeitsverteilung für jeden der Abschnitte gesondert die der Kombination dieses Abschnitts mit einem jeweiligen Abstandbereich zugeordnete Häufigkeit über diesem jeweiligen Abstandsbereich aufzutragen. Das Ermitteln einer blickfeldabschnittsspezifischen Häufigkeitsverteilung setzt dabei voraus, dass zusammen mit jedem Abstandswert jeweils auch die Information erfasst bzw. empfangen wird, in welchen Abschnitt des Blickfelds des Objektivs der Szeneriepunkt liegt, dessen Abstand von der Bewegtbildkamera dieser Abstandswert repräsentiert.

Der Unterschied zwischen der einheitlichen Häufigkeitsverteilung und der blickfeldabschnittsspezifischen Häufigkeitsverteilung besteht also im Wesentlichen darin, dass das Blickfeld des Objektivs in mehrere Abschnitte aufgeteilt wird und dass nicht alle Abstände, die in einen jeweiligen Abstandsbereich fallen, zusammengeworfen werden, sondern die Häufigkeiten für jeden der Abschnitte spezifisch bestimmt werden. Die Abschnitte, in die das Blickfeld aufgeteilt wird, können einem vorgegebenen oder vorgebbaren Raster entsprechen, wobei das Blickfeld beispielsweise horizontal und/oder vertikal, vorzugsweise mit regelmäßigen Winkelabständen, in Abschnitte unterteilt wird. Gemäß einer bevorzugten Ausführungsform ist das Blickfeld lediglich in eine Richtung unterteilt, vorzugweise entlang der Horizontalen. In diesem Fall entsprechen die Abschnitte somit vertikalen Streifen, die horizontal aneinander angrenzen. Auf diese Weise wird eine gegenüber einer zweidimensionalen Unterteilung geringere Komplexität insbesondere auch bei der graphischen Darstellung der Häufigkeitsverteilung erreicht. Als graphische Darstellung kann beispielsweise für jeden Abschnitt des Blickfeldes eine gesonderte Kurve angezeigt werden, welche die Häufigkeit der Abstandswerte der in diesem Abschnitt befindlichen Szeneriepunkte gegenüber dem jeweiligen Abstand von der Bewegtbildkamera angibt. Die verschiedenen Kurven können dabei zur deutlicheren Unterscheidung beispielsweise verschiedene Farben, Muster oder Kennzeichnungen aufweisen.

Gemäß einer vorteilhaften Ausführungsform ist die Auswerte- und Steuervorrichtung der Fokuseinstellungs-Anzeigeeinheit dazu ausgebildet, die Anzeigevorrichtung zum Anzeigen einer graphischen Darstellung der Häufigkeitsverteilung der Abstandswerte anzusteuern, die auf einen vorgebbaren Abstandsbereich und/oder auf einen adaptiven Abstandsbereich beschränkt ist. Mit anderen Worten wird die Häufigkeitsverteilung nicht unbedingt vollständig, d.h. über den gesamten Bereich, in dem Abstandwerte vorliegen, dargestellt, sondern es kann vorgesehen sein, dass, zumindest wahlweise, lediglich ein Teil der Häufigkeitsverteilung, der einem gewissen Abstandsbereich entspricht, dargestellt wird. Die Teile der Häufigkeitsverteilung, die außerhalb des jeweiligen Abstandsbereichs liegen, brauchen aber nicht unbedingt vollständig ausgeblendet zu werden, sondern können auch lediglich speziell gekennzeichnet, z.B. gefärbt, überlagert oder abgeschwächt, angezeigt werden.

Der genannte Abstandsbereich kann durch einen Nutzer der Fokuseinstellungs-Anzeigeeinheit vorgebbar sein. Insbesondere kann der vorgebbare Abstandsbereich jeweils einer Beschränkung der Verstellbarkeit der Fokusentfernung auf einen gewünschten Fokussierbereich entsprechen. Eine solche Beschränkung kann vorzugsweise von der für das Fokussieren zuständigen Person im Wesentlichen frei festgelegt werden, um je nach aufzuzeichnender Szenerie ein Verstellen der Fokusentfernung über gewisse Grenzen hinaus von vornherein auszuschließen. Wenn die Fokusentfernung nur innerhalb eines eingeschränkten Fokussierbereichs verstellbar ist, kann es zur Unterstützung des Fokussierens ausreichen, die Häufigkeitsverteilung nur für solche Abstandswerte anzuzeigen, die innerhalb dieses Fokussierbereichs liegen, was dann dadurch erreicht werden kann, dass der vorgebbare Abstandsbereich in Übereinstimmung mit dem festgelegten Fokussierbereich gebracht wird. Das erfolgt vorzugsweise automatisch, so dass durch das Setzen von Begrenzungen der Fokusverstellung zugleich auch der Abstandsbereich, für den die Häufigkeitsverteilung angezeigt wird, in entsprechender Weise vorgegeben wird.

Alternativ oder zusätzlich kann die Fokuseinstellungs-Anzeigeeinheit die Möglichkeit bieten, anstelle eines direkt oder durch Festlegen eines eingeschränkten Fokussierbereichs vorgebbaren Abstandsbereichs für die graphische Darstellung der Häufigkeitsverteilung auch einen adaptiven Abstandsbereich auszuwählen, der sich selbst automatisch an veränderte Gegebenheiten, insbesondere an Veränderungen der Häufigkeitsverteilung, anpasst. Auf diese Weise kann der angezeigte Abstandsbereich der Häufigkeitsverteilung vorteilhafterweise auf Bewegungen von Objekten der erfassten Szenerie reagieren. Vorzugsweise entspricht der adaptive Abstandsbereich dabei jeweils dem Bereich eines Berges der Häufigkeitsverteilung, nämlich insbesondere desjenigen Bergs, der von allen Bergen der Häufigkeitsverteilung dem geringsten Abstand von der Bewegtbildkamera entspricht. Alternativ kann vorgesehen sein, dass ein Nutzer der Fokuseinstellungs-Anzeigeeinheit einen Berg der Häufigkeitsverteilung individuell auswählen kann und der adaptive Abstandsbereich dann dem Bereich dieses Berges entspricht.

Ein Berg der Häufigkeitsverteilung entspricht dabei einem Bereich um ein zumindest lokales Maximum der Häufigkeitsverteilung. Die Ausdehnung dieses Bereichs kann auf verschiedene Weise definiert sein, beispielsweise durch eine Halbwertsbreite oder dadurch, dass sich der Berg so weit erstreckt, wie die Werte zu beiden Seiten des Maximums monoton abnehmen. Eine je größere Oberfläche eines Objekts im Blickfeld des Objektivs in einem gewissen Abstand oder Abstandsbereich von der Bewegtbildkamera angeordnet ist, desto ausgeprägter, d.h. breiter und insbesondere höher ist der entsprechende Berg in der Häufigkeitsverteilung. Dabei kann ferner vorgesehen sein, dass für die Bestimmung des adaptiven Abstandsbereichs als Berg lediglich ein durch ein solches Maximum definierter Bereich angesehen wird, dessen Höhe einen gewissen Schwellenwert überschreitet, um etwa lokale Maxima eines Hintergrundrauschens oder besonders kleinen Objekten der Szenerie entsprechende Maxima auszuschließen.

Die adaptive Anpassung des angezeigten Abstandsbereichs der Häufigkeitsverteilung an einen Berg der Häufigkeitsverteilung ermöglicht ein Isolieren der Abstandsinformation über ein einzelnes Objekt der Szenerie. Auf diese Weise wird das Fokussieren dieses einen Objekts vereinfacht, da es nicht mit anderen Objekten verwechselt werden kann. Außerdem können Bewegungen des Objekts auf die Bewegtbildkamera zu oder von der Bewegtbildkamera weg einfach anhand von Verschiebungen des Berges in der Häufigkeitsverteilung nachverfolgt und die Fokusentfernung dabei jeweils entsprechend angepasst werden. Grundsätzlich kann der isolierte Berg der Häufigkeitsverteilung auch als Grundlage für ein automatisches Nachführen der Fokusentfernung zur Anpassung an Änderungen des Abstands des entsprechenden Objekts von der Bewegtbildkamera herangezogen werden. Wenn die Fokuseinstellungs-Anzeigeeinheit dazu ausgebildet ist, die Fokusentfernung des Objektivs zu verstellen, kann auf diese Weise eine Art automatisches Fokustracking eines Objekts der Szenerie realisiert werden.

Gemäß einer vorteilhaften Ausführungsform ist die Auswerte- und Steuervorrichtung dazu ausgebildet, die Anzeigevorrichtung zum Anzeigen einer graphischen Darstellung der Häufigkeitsverteilung der Abstandswerte anzusteuern, die eine gesonderte Kennzeichnung von Maxima der Häufigkeitsverteilung mittels graphischer Marker umfasst. Ein graphischer Marker kann beispielsweise ein Pfeil oder ein Dreieck sein und auf das jeweilige Maximum weisen. Verschiedene Maxima können dabei durch verschiedene Marker gekennzeichnet werden, die sich beispielsweise hinsichtlich ihrer Form und/oder Farbe unterscheiden.

Bei Änderungen der Häufigkeitsverteilung, die durch Bewegungen der Objekte der Szenerie verursacht werden, wird jeder Marker vorzugsweise fortlaufend mit dem entsprechenden Maximum mitgeführt. Liegen für die empfangenen Abstandswerte jeweils auch Informationen über die Position des zugrunde liegenden Szeneriepunktes innerhalb des Blickfelds des Objektivs vor, können zwei oder mehr Maxima auch dann mitverfolgt und durch unterschiedliche Marker spezifisch gekennzeichnet werden, wenn sie ihre Plätze in der Häufigkeitsverteilung tauschen und dabei gegebenenfalls vorübergehend einander so überlagen, dass sie ein einziges Maximum bilden. Die Kennzeichnung der Maxima mit graphischen Markern dient der visuellen Hervorhebung der Maxima und somit einzelner Objekte der Szenerie, die den verschiedenen Maxima zugrunde liegen. Auf diese Weise werden die Fokussierung eines jeweiligen Objekts sowie ein Verstellen der Fokussierung bei einem Wechsel des zu fokussierenden Objekts vereinfacht. Grundsätzlich können dabei zur Vereinfachung der Darstellung auch durch einen jeweiligen Marker gekennzeichnete Bereiche der Häufigkeitsverteilung ausgeblendet und an deren Stelle lediglich der entsprechende Marker angezeigt werden.

Gemäß einer weiteren vorteilhaften Ausführungsform umfasst die Fokuseinstellungs-Anzeigeeinheit ferner einen Steuersignalausgang zum Ausgeben von Steuersignalen zum Verstellen der Fokusentfernung des Objektivs. Über einen solchen Steuersignalausgang kann die Fokuseinstellungs-Anzeigeeinheit Steuersignale insbesondere an die Bewegtbildkamera, an deren Objektiv oder an eine gesonderte Objektivantriebsvorrichtung ausgeben, um darüber die Fokusentfernung des Objektivs zu verstellen. Insofern kann eine solche Ausführungsform der Fokuseinstellungs-Anzeigeeinheit auch als Fokuseinstellungs-Anzeige- und -Steuereinheit oder einfach als Fokuseinstellungseinheit bezeichnet werden. Die Steuersignale für das Verstellen der Fokusentfernung können dabei beispielsweise durch die Auswerte- und Steuervorrichtung der Fokuseinstellungs-Anzeigeeinheit, insbesondere in Abhängigkeit von Eingaben eines Nutzers und/oder von Veränderungen der Häufigkeitsverteilung der Abstandswerte, erzeugt werden. Alternativ oder zusätzlich zum Ausgeben von Steuersignalen für das Verstellen der Fokusentfernung des Objektivs kann der Steuersignalausgang auch dazu ausgebildet sein, Steuersignale zum Einstellen eines Entfernungssensors auszugeben, der zum Messen der Abstände der Szeneriepunkte von der Bewegtbildkamera vorgesehen sein kann.

Des Weiteren kann die Fokuseinstellungs-Anzeigeeinheit ein Bedienelement umfassen, wobei die Auswerte- und Steuervorrichtung dazu ausgebildet ist, in Abhängigkeit von Betätigungen des Bedienelements Steuersignale zum Verstellen der Fokusentfernung des Objektivs an dem Steuersignalausgang auszugeben. Eingaben eines Nutzers können in diesem Fall also durch die Betätigung des Bedienelements erfolgen. Bei dem Bedienelement kann es sich insbesondere um einen Drehknopf handeln. Die graphischen Darstellungen der Fokuseinstellung und der Häufigkeitsverteilung der Abstandswerte auf der Anzeigevorrichtung sind dabei vorzugsweise derart ausgerichtet, dass eine Achse, die den Abstand von der Bewegtbildkamera angibt, senkrecht zu einer Drehachse des Drehknopfs angeordnet ist, so dass ein Verstellen der Fokusentfernung durch Drehen des Drehknopfs dazu führt, dass die graphischen Darstellungen in Umlaufrichtung oder tangential zur Drehachse relativ zueinander verschoben werden.

Vorzugsweise wird dabei die graphische Darstellung der Häufigkeitsverteilung verschoben, während die graphische Darstellung der Fokuseinstellung stillsteht. Auf diese Weise kann die graphische Darstellung der Fokuseinstellung vorteilhafterweise dauerhaft zentral auf einer Anzeigefläche der Anzeigevorrichtung angezeigt werden, während die Veränderung der Anordnung der graphischen Darstellung der Häufigkeitsverteilung infolge eines Verstellens der Fokusentfernung dazu genutzt werden kann, die Übereinstimmung der Fokusentfernung bzw. des Fokusbereichs mit einem zu fokussierenden Objekt zu überprüfen und erforderlichenfalls durch Betätigung des Bedienelement herbeizuführen.

Gemäß einer vorteilhaften Ausführungsform ist die Auswerte- und Steuervorrichtung dazu ausgebildet, in Abhängigkeit von Veränderungen der Häufigkeitsverteilung der Abstandswerte Steuersignale zum Verstellen der Fokusentfernung des Objektivs an dem Steuersignalausgang auszugeben. Mit anderen Worten wertet die Auswerte- und Steuervorrichtung die Häufigkeitsverteilung und gegebenenfalls deren Veränderungen aus, um über die in Reaktion auf solche Veränderungen an dem Steuersignalausgang ausgegebenen Steuersignale die Fokusentfernung automatisch anzupassen.

Vorzugsweise erfolgt das von Veränderungen der Häufigkeitsverteilung abhängige Ausgeben von Steuersignalen derart, dass die Fokusentfernung des Objektivs gemäß einem durch einen charakteristischen Bereich der Häufigkeitsverteilung definierten Sollwert für die Fokusentfernung geregelt wird. Mit anderen Worten ist die Auswerte- und Steuervorrichtung dazu ausgebildet, zunächst einen solchen charakteristischen Bereich der Häufigkeitsverteilung zu identifizieren und daraus einen Sollwert für die einzustellende Fokusentfernung abzuleiten, der dann für eine Regelung der Fokusentfernung maßgeblich ist. Beispielsweise kann der charakteristische Bereich ein Berg der Häufigkeitsverteilung sein und als Sollwert dann der Abstandwert festgelegt werden, der dem Maximum des Berges entspricht. Weist die Häufigkeitsverteilung mehrere charakteristische Bereiche auf, kann vorgesehen sein, dass ein Nutzer daraus einen charakteristischen Bereich auswählen kann, der für die Bestimmung des Sollwerts der Fokusentfernung herangezogen wird. Eine solche Auswahl kann besonders einfach durch Berühren des charakteristischen Bereichs in der graphischen Darstellung der Häufigkeitsverteilung auf einem berührungsempfindlichen Bildschirm der Anzeigevorrichtung erfolgen.

Um einen identifizierten und/oder ausgewählten charakteristischen Bereich der Häufigkeitsverteilung auch dann mitverfolgen zu können, wenn Abstandswerte, denen verschiedene Objekte der Szenerie zugrunde liegen, zumindest vorübergehend überlappen und daher zumindest bei einer einheitlichen Häufigkeitsverteilung keine eindeutige Zuordnung zu einzelnen dieser Objekte möglich ist, können zusätzliche Informationen hinzugezogen werden. Beispielsweise können die Abstandswerte zusammen mit Informationen über die Position des jeweils zugrunde liegenden Szeneriepunktes innerhalb des Blickfelds des Objektivs empfangen werden, wenn ein zur Messung der Abstände genutzter Entfernungssensor dazu ausgebildet ist, richtungsspezifisch zu messen. Die Abstandswerte können aber auch mit auf andere Weise ermittelter zusätzlicher Positionsinformation verknüpft werden, die beispielsweise aus dem aufgezeichneten Bild der Szenerie, etwa mittels Methoden der Objekt- und/oder Gesichtserkennung bzw. -verfolgung, abgeleitet wird.

Gemäß einer weiteren vorteilhaften Ausführungsform umfasst die Anzeigevorrichtung einen berührungsempfindlichen Bildschirm, der dazu ausgebildet ist, die graphische Darstellung der Fokuseinstellung und die graphische Darstellung der Häufigkeitsverteilung der Abstandswerte anzuzeigen sowie Berührungseingaben zu erfassen. Alternativ oder zusätzlich können für die Interaktion zwischen einem Nutzer und der Fokuseinstellungs-Anzeigeeinheit auch Knöpfe, Tasten oder ähnliches in Verbindung mit einer auf der Anzeigevorrichtung angezeigten Menüführung vorgesehen sein. Ein berührungsempfindlicher Bildschirm ermöglicht demgegenüber eine besonders komfortable Eingabe bei geringem Platzbedarf. Die Berührungseingaben können beispielsweise, wie vorstehend erläutert, der Auswahl eines charakteristischen Bereichs der Häufigkeitsverteilung dienen, etwa um die Fokusentfernung automatisch diesem charakteristischen Bereich bzw. dem zugrunde liegenden Objekt der Szenerie nachzuführen. Außerdem können Berührungseingaben zur Konfiguration von durch die Anzeigevorrichtung angezeigten Inhalten dienen. Beispielsweise kann durch Wischen eines Fingers nach oben oder unten die Skalierung der Inhalte in vertikaler Richtung und durch Wischen eines Fingers nach links oder rechts die Skalierung der Inhalte in horizontaler Richtung vergrößert bzw. verkleinert werden; durch doppeltes Tippen mit einem Finger kann die Skalierung auf eine Grundeinstellung zurücksetzbar sein. Anstelle eines Bildschirms oder zusätzlich zu einem Bildschirm kann die Anzeigevorrichtung auch eine Schnittstelle zum Anschließen eines externen, vorzugsweise berührungsempfindlichen, Bildschirms aufweisen. Diese Schnittstelle kann für eine kabelgebundene und/oder für eine funkbasierte Verbindung ausgelegt sein. In ähnlicher Weise können auch der genannte Dateneingang und/oder, sofern vorhanden, der Steuersignalausgang der Fokuseinstellungs-Anzeigeeinheit für eine kabelgebundene und/oder für eine funkbasierte Verbindung ausgelegt sein.

Da Fokuseinstellungs-System gemäß Anspruch 11 für eine Bewegtbildkamera umfasst gemäß Anspruch 1 eine Fokuseinstellungs-Anzeigeeinheit, die entsprechend zumindest einer der vorstehend beschriebenen Ausführungsformen ausgebildet sein kann, sowie außerdem einen Entfernungssensor zum Messen der Abstände der Vielzahl von Szeneriepunkten von der Bewegtbildkamera sowie zum Ausgeben von Abstandswerten, welche die gemessenen Abstände repräsentieren, an den Dateneingang der Fokuseinstellungs-Anzeigeeinheit. Grundsätzlich könnte die Abstandsinformation dabei auch aus der Bildinformation, etwa aus einem Stereobild, abgeleitet werden. In einem solchen Fall ist der Entfernungssensor keine gesonderte Vorrichtung, sondern eine in die Bewegtbildkamera integrierte funktionale Einheit. Vorzugsweise handelt es sich bei dem Entfernungssensor jedoch um eine von der Bewegtbildkamera separate, wenn auch zweckmäßigerweise an der Bewegtbildkamera angebrachte oder zumindest zur Anbringung an eine Bewegtbildkamera ausgebildete, Vorrichtung. Der Entfernungssensor kann beispielsweise auf Messtechniken wie RADAR, LIDAR oder TOF (Time-of-Flight) basieren. Wenn die Anzeigevorrichtung der Fokuseinstellungs-Anzeigeeinheit des Fokuseinstellungs-Systems einen berührungsempfindlichen Bildschirm umfasst, kann der Entfernungssensor vorzugsweise durch Berührungseingaben an diesem Bildschirm eingestellt werden. Insofern kann die Fokuseinstellungs-Anzeigeeinheit beispielsweise dazu ausgebildet sein, in Abhängigkeit von erfassten Berührungseingaben Steuersignale an den Entfernungssensor auszugeben, um das Blickfeld des Entfernungssensors zu verstellen, insbesondere an das momentane Blickfeld des Objektivs der Bewegtbildkamera anzupassen.

Vorzugsweise erfolgt eine solche Anpassung des Blickfelds des Entfernungssensors automatisch in Abhängigkeit von einer empfangenen Objektiveinstellung, insbesondere in Abhängigkeit von einer Fokuseinstellung, einer Brennweiteneinstellung oder einer sonstigen Objektiveinstellung, die Informationen über das momentane Blickfeld des Objektivs umfassen kann oder aus der sich solche Informationen ableiten lassen können. Dabei kann aber vorgesehen sein, dass von der automatischen Einstellung des Entfernungssensors manuell abgewichen werden kann, beispielsweise um das Messen der Abstände einer Vielzahl von Szeneriepunkten auf einen speziellen Bereich von Interesse innerhalb des Blickfeldes des Objektivs zu beschränken oder um das Messen der Abstände auch auf Bereiche außerhalb des Blickfelds des Objektivs zu erweitern.

Beispiele für Berührungseingaben zum Einstellen des Entfernungssensors sind etwa das Spreizen und das Zusammenführen zweier Finger in horizontaler oder vertikaler Richtung auf einem berührungsempfindlichen Bildschirm, die zu einer Vergrößerung bzw. Verringerung des Blickfelds des Entfernungssensors in horizontaler bzw. vertikaler Richtung führen. Ferner kann beispielsweise durch Wischen zweier Finger in horizontaler oder vertikaler Richtung auf einem berührungsempfindlichen Bildschirm das Blickfeld des Entfernungssensors in horizontaler bzw. vertikaler Richtung verschiebbar oder verschwenkbar sein.

Gemäß einer vorteilhaften Ausführungsform umfasst das Fokuseinstellungs-System ferner eine Objektivantriebsvorrichtung, die dazu ausgebildet ist, an einem Steuersignalausgang der Fokuseinstellungs-Anzeigeeinheit ausgegebene Steuersignale zu empfangen und die Fokusentfernung des Objektivs in Abhängigkeit von den empfangenen Steuersignalen zu verstellen. Die Objektivantriebsvorrichtung ist vorzugsweise dazu ausgebildet, an dem Objektiv der Bewegtbildkamera angebracht zu werden. Beispielsweise kann die Objektivantriebsvorrichtung ein oder mehrere motorisch angetriebene Antriebsräder aufweisen, die jeweils an einem Stellring des Objektivs abwälzen, um die Fokusentfernung des Objektivs und gegebenenfalls weitere Einstellungen, insbesondere eine Blendenzahl und/oder einer Brennweite (Zoom), des Objektivs zu verstellen.

Das Verfahren zur Vereinfachung des Fokussierens einer Bewegtbildkamera gemäß Anspruch 13 umfasst die folgenden Schritte: Erfassen einer Fokuseinstellung, welche eine momentane Fokusentfernung eines Objektivs der Bewegtbildkamera repräsentiert; Messen der Abstände einer Vielzahl von Szeneriepunkten im Blickfeld des Objektivs von der Bewegtbildkamera mittels eines Entfernungssensors; Ermitteln einer Häufigkeitsverteilung von Abstandswerten, welche die gemessenen Abstände repräsentieren; und Anzeigen einer graphischen Darstellung der Fokuseinstellung sowie einer graphischen Darstellung der Häufigkeitsverteilung der Abstandswerte auf einer Anzeigevorrichtung in einer räumlichen Beziehung zueinander, welche das räumliche Verhältnis der momentanen Fokusentfernung des Objektivs zu den Abständen der Vielzahl von Szeneriepunkten wiederspiegelt. Sofern der räumliche Zusammenhang zwischen dem Entfernungssensor und der Bewegtbildkamera nicht vorab bekannt ist, kann diesen Schritten ferner eine Kalibrierung des Entfernungssensors vorangehen, durch die der Abstand eines Bezugspunkts oder einer Bezugsebene des Entfernungssensors zur Bezugsebene, insbesondere Bildebene, der Bewegtbildkamera bzw. des Objektivs ermittelt wird, um von dem Entfernungssensors relativ zu seinem Bezugspunkt bzw. zu seiner Bezugsebene gemessene Abstände der Szeneriepunkte in Abstände der Szeneriepunkte von der Bewegtbildkamera umrechnen zu können.

Ausführungsformen des Verfahrens können dabei jeweils einen oder mehrere Schritte zusätzlich aufweisen, die vorstehend im Zusammenhang mit Ausführungsformen der Fokuseinstellungs-Anzeigeeinheit und des Fokuseinstellungs-Systems beschrieben wurden, insbesondere solche Schritte, zu deren Ausführung ein Element einer jeweiligen Ausführungsform der Fokuseinstellungs-Anzeigeeinheit bzw. des Fokuseinstellungs-Systems speziell ausgebildet ist. Die Vorteile des jeweiligen Verfahrens ergeben sich in entsprechender Weise wie für eine Ausführungsform der Fokuseinstellungs-Anzeigeeinheit bzw. des Fokuseinstellungs-Systems, die zur Ausführung dieses Verfahrens genutzt werden kann. Insbesondere wird durch das erfindungsgemäße Verfahren die Fokussierung dadurch vereinfacht, dass das räumliche Verhältnis der momentanen Fokusentfernung zu den gemessenen Abständen der Vielzahl von Szeneriepunkten und somit zu den Objekten der Szenerie intuitiv und komfortabel anhand der räumlichen Beziehung der Darstellungen auf der Anzeigevorrichtung erfasst werden kann, so dass die für das Fokussieren zuständige Person fortlaufend eine direkte und zuverlässige visuelle Rückmeldung über die momentane Fokussierung erhält.

Das genannte Verfahren kann auf besonders einfache Weise insbesondere auch auf einer externen Anzeigevorrichtung, beispielsweise einem separaten Display, ausgeführt werden, indem die Anzeigevorrichtung zur Durchführung des Verfahrens bzw. der Schritte hiervon angesteuert wird.

Das Verfahren zum Fokussieren einer Bewegtbildkamera gemäß Anspruch 14 umfasst die Schritte des vorstehend genannten Verfahrens zur Vereinfachung des Fokussierens einer Bewegtbildkamera und darüber hinaus die folgenden Schritte: Identifizieren eines charakteristischen Bereichs der Häufigkeitsverteilung als repräsentativ für ein zu fokussierendes Objekt; Verstellen der Fokusentfernung des Objektivs, bis die graphische Darstellung der Fokuseinstellung und die graphische Darstellung der Häufigkeitsverteilung der Abstandwerte auf der Anzeigevorrichtung in einer räumlichen Beziehung zueinander angezeigt werden, die einer Fokussierung des charakteristischen Bereichs entspricht. Durch dieses erweiterte Verfahren wird das konkrete Verstellen der Fokusentfernung nicht nur vereinfacht, sondern vorteilhafterweise auch gleich ausgeführt. Das Verstellen der Fokusentfernung kann dabei manuell, teilweise automatisch oder auch vollständig automatisch erfolgen.

Die Erfindung wird nachfolgend lediglich beispielhaft unter Bezugnahme auf die Figuren weiter erläutert.
- Fig. 1: zeigt in exemplarischer schematischer Darstellung eine mittels einer Bewegtbildkamera aufzuzeichnende Szenerie in einer Ansicht von oben sowie eine der Szenerie entsprechende Häufigkeitsverteilung von Abstandswerten gemäß einer Ausführungsform der Erfindung.
- Fig. 2 und 3: zeigen schematische Darstellungen einer Ausführungsform der erfindungsgemäßen Fokuseinstellungs-Anzeigeeinheit, deren Anzeigevorrichtung graphische Darstellungen der Fokuseinstellung sowie der Häufigkeitsverteilung der Abstandswerte in unterschiedlichen räumlichen Beziehungen zueinander anzeigt.
- Fig. 4 und 5: zeigen der Fig. 1 entsprechende Darstellungen und illustrieren verschiedene Möglichkeiten einer graphischen Darstellung der Häufigkeitsverteilung, wenn sich zwei Objekte der Szenerie in demselben Abstand von der Bewegtbildkamera befinden.
- Fig. 6, 7 und 8: zeigen den Fig. 2 und 3 entsprechende Darstellungen und illustrieren ergänzende Möglichkeiten, die graphischen Darstellungen der Fokuseinstellung sowie der Häufigkeitsverteilung der Abstandswerte anzuzeigen.
- Fig. 9: zeigt in schematischer Darstellung eine weitere Ausführungsform einer erfindungsgemäßen Fokuseinstellungs-Anzeigeeinheit.

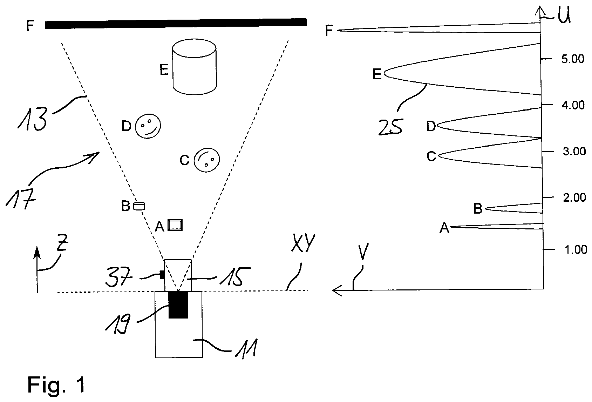

Auf der linken Seite der Fig. 1 sind in einer Ansicht von oben eine Bewegtbildkamera 11 sowie mehrere im Blickfeld 13 eines Objektivs 15 der Bewegtbildkamera 11 befindliche Objekte A-F einer exemplarischen Szenerie 17 schematisch dargestellt. Die verschiedenen Objekte A-F weisen unterschiedliche Formen und räumliche Ausdehnungen auf und sind in unterschiedlichen Abständen zur Bewegtbildkamera 11 angeordnet.

Auf der Bewegtbildkamera 11 ist ein Entfernungssensor 19 befestigt, der so eingestellt ist, dass sein Blickfeld 13 mit demjenigen des Objektivs 15 zumindest weitgehend, insbesondere abgesehen von einer Parallaxe, die sich aus dem vertikalen Versatz des Entfernungssensors 19 zum Objektiv 15 ergibt, übereinstimmt. Mittels des Entfernungssensors 19 werden die Abstände einer Vielzahl von Szeneriepunkten erfasst, die regelmäßig über das Blickfeld 13 verteilt sind. Sofern sich in der einem jeweiligen Szeneriepunkt entsprechenden Blickrichtung eines der Objekte A-F befindet, liegt der Szeneriepunkt auf der Oberfläche dieses Objekts A-F, so dass der Abstand des Objekts A-F gemessen wird. Bei der dargestellten exemplarischen Szenerie 17 befindet sich aufgrund des ausgedehnten flachen Objekts F im Hintergrund der Szenerie 17 jeder Szeneriepunkt auf einem der Objekte A-F. Grundsätzlich könnte sich zumindest in einem Teil des Blickfelds 13 aber auch kein Objekt A-F innerhalb der Reichweite des Entfernungssensors 19 befinden, was zu Folge hat, dass dem entsprechenden Szeneriepunkt ein Maximalabstand oder ein unendlicher Abstand zugeordnet wird.

Der Entfernungssensor 19 misst die Abstände der Szeneriepunkte grundsätzlich relativ zu sich selbst. Aufgrund der definierten räumlichen Anordnung des Entfernungssensors 19 relativ zur Bewegtbildkamera 11 können diese Abstände aber zu Abständen von der Bewegtbildkamera 11 umgerechnet werden. Die Abstände sind dabei auf eine Bezugsebene XY bezogen, die insbesondere durch die Film- bzw. Sensorebene der Bewegtbildkamera 11 (Bildebene des Objektivs 15) oder durch die Hauptebene des Objektivs 15 definiert ist. Folglich sind die Abstände auf die Raumrichtung Z bezogen, die senkrecht zu der Bezugsebene XY ausgerichtet ist und in der Regel als Tiefe bezeichnet wird. Die von dem Entfernungssensor 19 typischerweise radial zum Entfernungssensor 19 gemessenen Abstände werden jeweils entweder direkt herangezogen, da sie entlang der Raumrichtung Z gemessenen Abständen zumindest näherungsweise entsprechen, oder in solche Abstände umgerechnet.

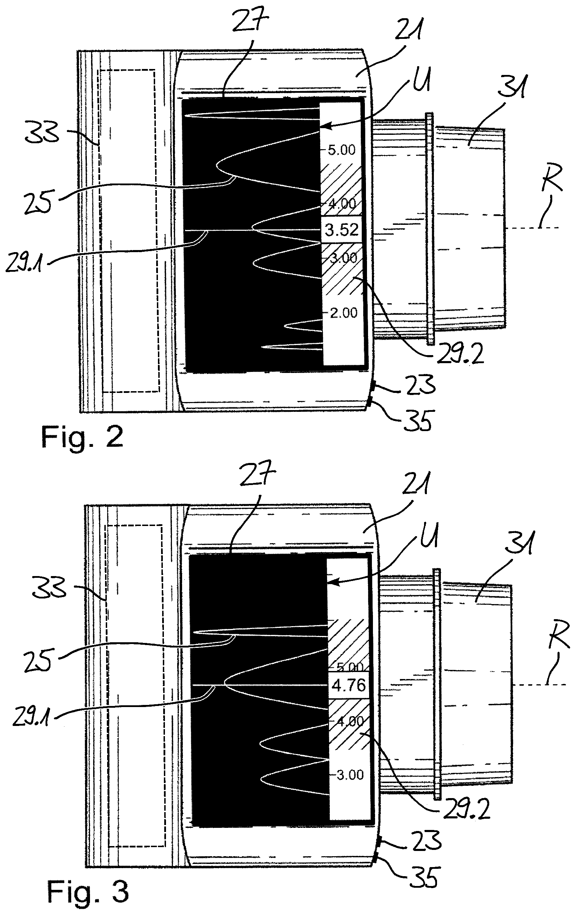

Die Abstände werden in Form von Abstandswerten, die auch weitere Informationen über den jeweiligen Szeneriepunkt, z.B. dessen Raumwinkel relativ zum Entfernungssensor 19 bzw. zur Bewegtbildkamera 11, umfassen können, von einer Fokuseinstellungs-Anzeigeeinheit 21 über einen Dateneingang 23 empfangen (vgl. z.B. Fig. 2). Über den Dateneingang 23 empfängt die Fokuseinstellungs-Anzeigeeinheit 21 ferner auch die Fokuseinstellung des Objektivs 15, welche eine momentane Fokusentfernung des Objektivs 15 repräsentiert. Die Fokusentfernung des Objektivs 15 ist dabei vorzugsweise in entsprechender Weise wie die genannten Abstände der Szeneriepunkte definiert, d.h. auf die Raumrichtung Z bezogen mit der Bezugsebene XY als Nullpunkt. Dadurch lassen sich die momentane Fokusentfernung des Objektivs 15 und die gemessenen Abstände der Szeneriepunkte direkt in Bezug zueinander setzen.

Die rechte Seite der Fig. 1 zeigt eine graphische Darstellung einer Häufigkeitsverteilung 25 der von der Fokuseinstellungs-Anzeigeeinheit 21 empfangenen Abstandswerte. Die in Fig. 1 vertikale Achse U entspricht dabei der Tiefe Z. Über dieser Achse U als Abszisse ist die Häufigkeitsverteilung 25 als Kurve aufgetragen, wobei die Ordinate V die Häufigkeit, also die (gegebenenfalls gemittelte) Anzahl der einer gewissen Tiefe Z entsprechenden gemessenen Abstände, angibt. Für die Bestimmung der Häufigkeit wird die Tiefe Z dabei in eine Reihe aufeinanderfolgender Abstandsbereiche aufgeteilt. Die angegebene Skalierung der Achse U ist im dargestellten Beispiel linear, die Maßeinheit der Zahlenwerte ist beispielsweise Meter. Die Ordinate V kann eine willkürliche Einheit aufweisen und beispielsweise linear oder logarithmisch skaliert sein.

Die Häufigkeitsverteilung 25 weist mehrere Berge auf, die sich aufgrund der Häufung von Abstandswerten ergeben, die einen Abstand von der Bewegtbildkamera 11 repräsentieren, in dem sich eines der Objekte A-F befindet. Die Fläche eines Berges hängt dabei von der Größe der von der Bewegtbildkamera 11 bzw. dem Entfernungssensor 19 aus sichtbaren Oberfläche des jeweiligen Objekts A-F ab. Dabei ist die Breite eines Berges ein Zeichen für eine Varianz der an einem jeweiligen Objekt A-F gemessenen Abstände und somit für Objekte A-F, deren Oberfläche von einer zur Bezugsebene XY parallelen Ausrichtung mehr oder weniger stark abweicht.

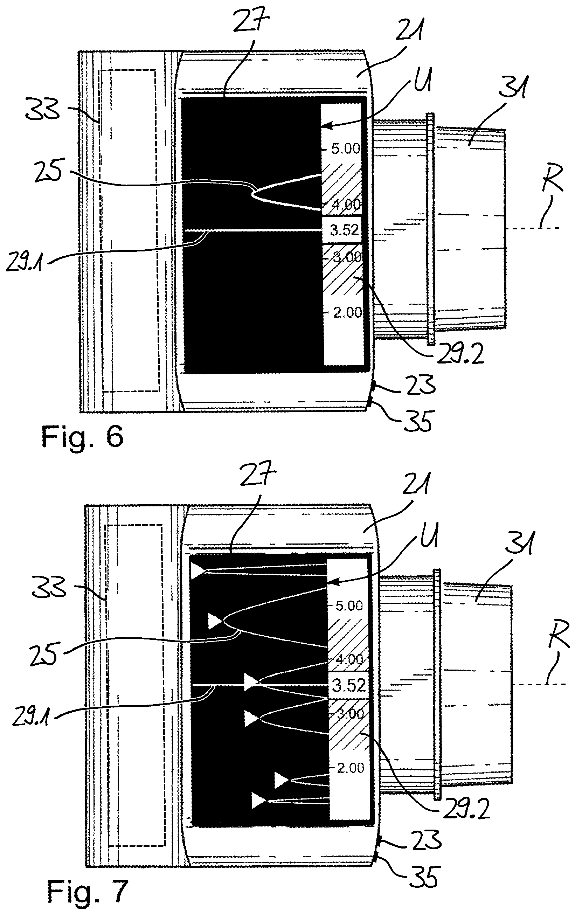

Insbesondere anhand ihrer Position entlang der Achse U, aber zusätzlich auch anhand ihrer Fläche und Breite können die Berge der Häufigkeitsverteilung 25 den verschiedenen Objekten A-F zugeordnet werden und sind in Fig. 1 daher auf entsprechende Weise mit A bis F gekennzeichnet. Eine solche Kennzeichnung kann auch Teil der graphischen Darstellung der Häufigkeitsverteilung 25 sein. Eine alternative Art der Kennzeichnung durch Marker ist in Fig. 7 gezeigt.

In den Fig. 2, 3, 6, 7 und 8 ist jeweils eine Fokuseinstellungs-Anzeigeeinheit 21 mit einer Anzeigevorrichtung 27 gezeigt, welche eine graphische Darstellung der Fokuseinstellung 29 des Objektivs 15 sowie eine graphische Darstellung der Häufigkeitsverteilung 25 in einer räumlichen Beziehung zueinander anzeigt, welche das räumliche Verhältnis der momentanen Fokusentfernung des Objektivs 15 zu den Abständen der Vielzahl von Szeneriepunkten wiederspiegelt, auf denen die der Häufigkeitsverteilung zugrundliegenden Abstandswerte beruhen. Dabei kann es sich bei den in diesen Figuren gezeigten Fokuseinstellungs-Anzeigeeinheiten 21 jeweils um dieselbe Ausführungsform handeln, wobei diese Fokuseinstellungs-Anzeigeeinheit 21 dazu ausgebildet ist, die Häufigkeitsverteilung 25 sowie die Fokuseinstellung 29 des Objektivs 15 je nach Vorgabe durch einen Nutzer in einer der verschiedenen in den Figuren gezeigten Weisen darzustellen. Bei den in den genannten Figuren gezeigten Fokuseinstellungs-Anzeigeeinheiten 21 kann es sich aber auch um jeweils unterschiedliche Ausführungsformen handeln.

Die graphische Darstellung der Fokuseinstellung 29 umfasst einen Strich 29.1 sowie einen in der Schwarz-Weiß-Darstellung der Figuren schraffiert dargestellten Bereich 29.2, der beispielsweise auch als farbiger Hintergrund dargestellt sein könnte. Ebenso kann der Strich 29.1 farbig sein, insbesondere mit einer von der Farbe der graphischen Darstellung der Häufigkeitsverteilung 25 abweichenden Farbe. Die Fokuseinstellung 29 des Objektivs 15 sowie die Häufigkeitsverteilung 25 sind über einer gemeinsamen Achse U aufgetragen dargestellt, die der in Fig. 1 gezeigten Achse U entspricht. Der Strich 29.1 ist dabei an der Achse U an derjenigen Position, die der momentanen Fokusentfernung des Objektivs 15 entspricht. Zusätzlich zu der Darstellung als Strich 29.1 wird die momentane Fokusentfernung außerdem als durch einen Rahmen hervorgehobener Zahlenwert im Bereich der Skala der Achse U angezeigt. Durch den Bereich 29.2 wird der Abstandsbereich gekennzeichnet, welcher dem momentanen Fokusbereich des Objektivs 15 entspricht. Die graphische Darstellung der Häufigkeitsverteilung 25 kann durch die graphische Darstellung der Fokuseinstellung 29, insbesondere des momentanen Fokusbereichs 29.9, auch überlagert werden. Dadurch, dass die graphische Darstellung der Fokuseinstellung 29 des Objektivs 15 und die graphische Darstellung der Häufigkeitsverteilung 25 in einer speziellen räumlichen Beziehung zueinander, nämlich mit Bezug auf dieselbe gemeinsame Achse U, angezeigt werden, lässt sich das räumliche Verhältnis der momentanen Fokusentfernung und des momentanen Fokusbereichs des Objektivs 15 zu den als Berge in der Häufigkeitsverteilung 25 erscheinenden Objekten A-F schnell und intuitiv auf der Fokuseinstellungs-Anzeigeeinheit 21 ablesen.

Die in den Fig. 2, 3, 6 und 8 gezeigten Fokuseinstellungs-Anzeigeeinheiten 21 weisen neben der Anzeigevorrichtung 27 jeweils auch ein Bedienelement 31 in Form eines Drehknopfs auf, der um eine Drehachse R drehbar ist. In Abhängigkeit von einer Betätigung des Bedienelements 31 wird von einer im Inneren der Fokuseinstellungs-Anzeigeeinheit 21 angeordneten und in den Figuren lediglich schematisch dargestellten Auswerte- und Steuervorrichtung 33 der Fokuseinstellungs-Anzeigeeinheit 21 ein Steuersignal erzeugt und an einem Steuersignalausgang 35 der Fokuseinstellungs-Anzeigeeinheit 21 an eine am Objektiv 15 angeordnete Objektivantriebsvorrichtung 37 (vgl. Fig. 1) ausgegeben, um die Fokusentfernung des Objektivs 15 zu verstellen. Insofern handelt es sich bei den gezeigten Fokuseinstellungs-Anzeigeeinheiten 21 um Fokuseinstellungs-Anzeige- und -Steuereinheiten oder einfach um Fokuseinstellungseinheiten.

Das Verstellen der Fokusentfernung führt dazu, dass sich die graphische Darstellung der Fokuseinstellung 29 gegenüber der graphischen Darstellung der Häufigkeitsverteilung 25 entlang der gemeinsamen Achse U verschiebt. Wie im Vergleich der Fig. 2 und 3 zu erkennen ist, ändert dabei die graphische Darstellung der Fokuseinstellung 29 ihre Position in der Anzeigefläche der Anzeigevorrichtung 27 nicht, sondern es werden die Achse U und mit ihr die graphische Darstellung der Häufigkeitsverteilung 25 verschoben; außerdem wird der angezeigte Zahlenwert der momentanen Fokusentfernung an die Veränderung angepasst.

Da sich beim Fokussieren, also beim Verstellen der Fokusentfernung des Objektivs 15, die räumliche Beziehung der graphischen Darstellung der Fokuseinstellung 29 des Objektivs 15 relativ zur graphischen Darstellung der Häufigkeitsverteilung 25 in entsprechender Weise verändert, erhält die für das Fokussieren zuständige Person durch Blick auf die Fokuseinstellungs-Anzeigeeinheit 21 eine direkte Rückmeldung darüber, welche Objekte A-F sich momentan im Fokus des Objektivs 15 befinden. Insbesondere kann für das Fokussieren eines jeweiligen Objekts A-F der die Fokusentfernung repräsentierende Strich 29.1 mit dem diesem Objekt A-F entsprechenden Berg der Häufigkeitsverteilung 25 zumindest im Wesentlichen in Übereinstimmung gebracht werden, wie es in Fig. 2 und 3 für jeweils unterschiedliche Berge bzw. Objekte A-F gezeigt ist. Zugleich kann anhand des Bereichs 29.2 abgelesen werden, welche weiteren Objekte A-F zumindest noch im Fokusbereich des Objektivs 15 liegen. Auf diese Weise wird eine zuverlässige Fokussierung eines oder mehrerer jeweiliger Objekte A-F unterstützt und wesentlich vereinfacht.

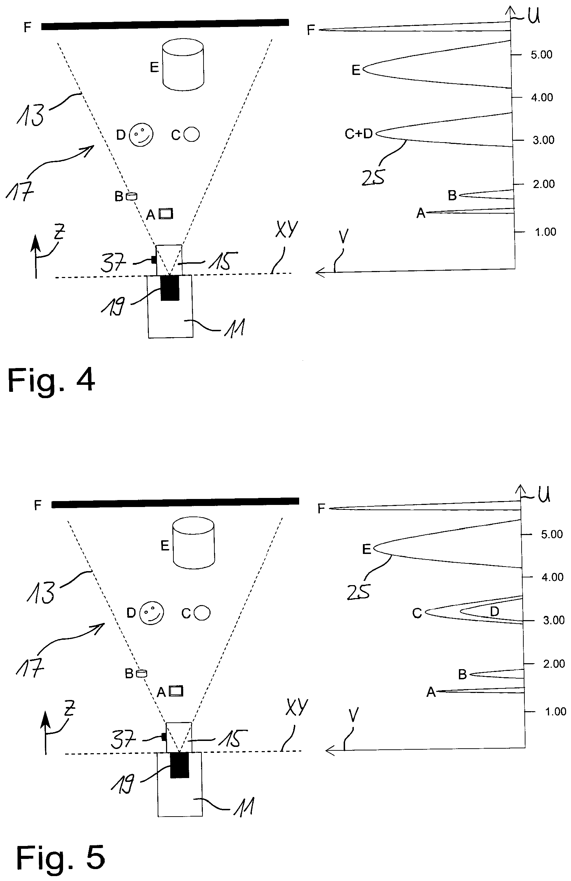

Die Fig. 4 und 5 zeigen zwei alternative Arten, die Häufigkeitsverteilung 25 zu ermitteln bzw. graphisch darzustellen, deren Unterschied insbesondere dann relevant ist, wenn zwei oder mehr Objekte C, D in demselben Abstand von der Bewegtbildkamera 11 angeordnet sind. Handelt es sich bei der Häufigkeitsverteilung um eine einheitliche Häufigkeitsverteilung, für die nicht zwischen aus verschiedenen Abschnitten des Blickfeldes 13 stammenden Abständen unterschieden wird, ergibt sich für die in den Fig. 4 und 5 gezeigte Anordnung von Objekten A-F die in Fig. 4 gezeigte Häufigkeitsverteilung 25. Darin entspricht dann ein einzelner Berg (als C+D gekennzeichnet) den mehreren Objekten C, D und weist daher eine entsprechend vergrößerte Höhe auf.

Ist der Entfernungssensor 19 dazu ausgebildet, für jeden Szeneriepunkt nicht nur dessen Abstand zu messen, sondern auch festzuhalten, in welchem von mehreren Abschnitten, in die das Blickfeld 13 des Objektivs 15 bzw. des Entfernungssensors 19 unterteilt wird, der Szeneriepunkt liegt, kann alternativ eine blickfeldabschnittsspezifische Häufigkeitsverteilung ermittelt werden. Bei der Ausführungsform nach Fig. 5 wird das Blickfeld 13 dazu in mehrere vertikale Streifen mit jeweils gleicher horizontaler Winkelausdehnung unterteilt. Die Objekte C und D liegen dann in unterschiedlichen dieser Abschnitte des Blickfeldes 13, für die jeweils gesondert die Häufigkeiten der Abstandswerte bestimmt werden. Wie in Fig. 5 gezeigt, kann die graphische Darstellung einer solchen blickfeldabschnittsspezifischen Häufigkeitsverteilung 25 mehrere Kurven umfassen, die unterschiedlichen Abschnitten des Blickfeldes 13 entsprechen und sich daher gegenseitig auch überlappen können. Auf diese Weise können verschiedene in demselben Abstand von der Bewegtbildkamera 11, aber in unterschiedlichen Abschnitten des Blickfelds 13 angeordnete Objekte C, D in der graphischen Darstellung der Häufigkeitsverteilung 25 unterschieden werden.

Auf der in Fig. 6 gezeigten Fokuseinstellungs-Anzeigeeinheit 21 wird eine graphische Darstellung einer Häufigkeitsverteilung 25 von Abstandswerten angezeigt, die auf einen adaptiven Abstandsbereich beschränkt ist, welcher durch die Position und Ausdehnung des angezeigten Berges der Häufigkeitsverteilung 25 definiert ist. Die Häufigkeitsverteilung 25 erstreckt sich eigentlich über einen größeren Bereich als lediglich die Breite dieses Berges und weist weitere Berge auf. Allerdings sind die übrigen Teile der Häufigkeitsverteilung 25 ausgeblendet, um den angezeigten Berg und somit das diesem Berg zugrunde liegende Objekt A-F speziell herauszustellen. Verschiebt sich der Berg innerhalb der Häufigkeitsverteilung 25 aufgrund einer Bewegung des zugrunde liegenden Objekts A-F, verändert sich in entsprechender Weise auch der insofern adaptive Abstandsbereich, innerhalb dessen die graphische Darstellung der Häufigkeitsverteilung 25 abgebildet wird.

Die Fig. 7 entspricht weitgehend der Fig. 2, wobei die Maximalwerte von Bergen der Häufigkeitsverteilung 25 jeweils durch einen Marker, der beispielsweise eine Dreieckform aufweist, speziell gekennzeichnet sind. Die Marker können sich für eine spezifische Zuordnung zu einem Berg bzw. dem zugrunde liegenden Objekt A-F der Szenerie 17 untereinander z.B. hinsichtlich ihrer Farbe und/oder Form unterscheiden. Bei Veränderungen der Häufigkeitsverteilung 25 infolge von Bewegungen der Objekte A-F werden die Marker in entsprechender Weise nachgeführt und vereinfachen dadurch insbesondere bei komplexen Szenerien die Zuordnung der Berge zu den Objekten A-F.

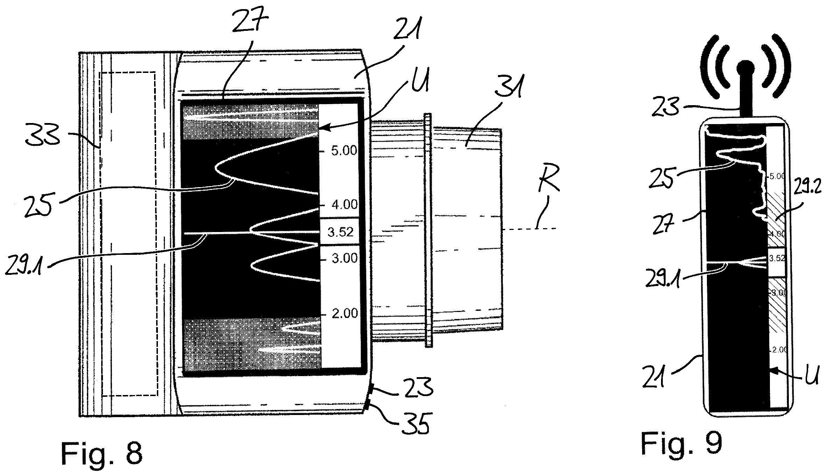

Bei der Fig. 8 ist die graphische Darstellung einer Häufigkeitsverteilung 25 ähnlich wie in Fig. 6 lediglich über einen gewissen Abstandsbereich unbeeinträchtigt angezeigt. In zwei Randbereichen der Achse U ist die Häufigkeitsverteilung 25 dagegen zwar nicht vollständig ausgeblendet, aber durch eine Überlagerung abgeschwächt dargestellt. Der Abstandsbereich, in dem die Häufigkeitsverteilung 25 unbeeinträchtigt dargestellt ist, entspricht dabei einem von einem Nutzer vorgegebenen Bereich, auf den das Verstellen der Fokuseinstellung des Objektivs 15 (jedenfalls mittels der Fokuseinstellungs-Anzeigeeinheit 21) beschränkt ist.

Eine von den in den übrigen Figuren gezeigten Fokuseinstellungs-Anzeigeeinheiten 21 wesentlich abweichende Ausführungsform einer Fokuseinstellungs-Anzeigeeinheit 21 ist in Fig. 9 gezeigt. Diese Ausführungsform weist keinen Drehknopf oder ein sonstiges mechanisches Bedienelement zum Verstellen der Fokuseinstellung des Objektivs 15 auf, sondern ist darauf beschränkt, das Fokussieren durch Anzeigen der graphischen Darstellung der Fokuseinstellung 29 des Objektivs 15 in der genannten räumlichen Beziehung zur graphischen Darstellung der Häufigkeitsverteilung 25 der Abstandswerte zu vereinfachen. Die Fokuseinstellungs-Anzeigeeinheit 21 kann daher vergleichsweise kompakt ausgebildet sein und etwa als Zubehör zu einer Fokussiervorrichtung oder zu einem Monitor zum Anzeigen des erfassten Bewegtbildes genutzt werden. Die Fokuseinstellungs-Anzeigeeinheit 21 kann dabei speziell für eine Befestigung an einer Fokussiervorrichtung, einem Monitor und/oder einer Bewegtbildkamera 11 ausgebildet sein. Das Empfangen der Fokuseinstellung und der Abstandswerte erfolgt bei dieser Fokuseinstellungs-Anzeigeeinheit 21 funkbasiert mittels einer Antenne, die den Dateneingang 23 der Fokuseinstellungs-Anzeigeeinheit 21 darstellt. Auch die in den übrigen Figuren gezeigten Fokuseinstellungs-Anzeigeeinheiten 21 können grundsätzlich eine oder mehrere derartige Antennen als Dateneingang 23 und/oder als Steuersignalausgang 35 aufweisen.

### Bezuqszeichen

- 11: Bewegtbildkamera
- 13: Blickfeld
- 15: Objektiv
- 17: Szenerie
- 19: Entfernungssensor
- 21: Fokuseinstellungs-Anzeigeeinheit
- 23: Dateneingang
- 25: graphische Darstellung der Häufigkeitsverteilung
- 27: Anzeigevorrichtung
- 29: graphische Darstellung der Fokuseinstellung 29.1: Strich; 29.2: Bereich
- 31: Bedienelement
- 33: Auswerte- und Steuervorrichtung
- 35: Steuersignalausgang
- 37: Objektivantriebsvorrichtung
- R: Drehachse
- U: gemeinsame Achse
- V: Ordinate
- XY: Bezugsebene
- Z: Tiefe

## Patentansprüche

1. Fokuseinstellungs-Anzeigeeinheit (21) für eine Bewegtbildkamera (11), mit
- einem Dateneingang (23) zum Empfangen einer Fokuseinstellung, welche eine momentane Fokusentfernung eines Objektivs (15) der Bewegtbildkamera (11) repräsentiert, sowie zum Empfangen von Abstandswerten, welche die Abstände einer Vielzahl von Szeneriepunkten im Blickfeld (13) des Objektivs (15) von der Bewegtbildkamera (11) repräsentieren,
- einer Anzeigevorrichtung (27) und
- einer Auswerte- und Steuervorrichtung (33),
**dadurch gekennzeichnet,**
**dass** die Auswerte- und Steuervorrichtung (33) dazu ausgebildet ist, die Anzeigevorrichtung (27) dazu anzusteuern, eine graphische Darstellung der Fokuseinstellung (29) sowie eine graphische Darstellung einer Häufigkeitsverteilung (25) der Abstandswerte in einer räumlichen Beziehung zueinander anzuzeigen, welche das räumliche Verhältnis der momentanen Fokusentfernung des Objektivs (15) zu den Abständen der Vielzahl von Szeneriepunkten wiederspiegelt.

2. Fokuseinstellungs-Anzeigeeinheit nach Anspruch 1,
wobei die Auswerte- und Steuervorrichtung (33) dazu ausgebildet ist, die Anzeigevorrichtung (27) dazu anzusteuern, für das Anzeigen der graphischen Darstellung der Fokuseinstellung (29) sowie der graphischen Darstellung der Häufigkeitsverteilung (25) der Abstandswerte die Fokuseinstellung und die Häufigkeitsverteilung über einer gemeinsamen Achse (U) aufgetragen darzustellen.

3. Fokuseinstellungs-Anzeigeeinheit nach zumindest einem der vorstehenden Ansprüche,
wobei die Auswerte- und Steuervorrichtung (33) dazu ausgebildet ist, die Häufigkeitsverteilung (25) der Abstandswerte als einheitliche Häufigkeitsverteilung zu ermitteln, indem jedem Abstandsbereich einer Reihe aufeinanderfolgender Abstandsbereiche als Häufigkeit die Anzahl aller in diesen Abstandsbereich fallenden Abstandswerte zugeordnet wird.

4. Fokuseinstellungs-Anzeigeeinheit nach zumindest einem der vorstehenden Ansprüche,
wobei die Auswerte- und Steuervorrichtung (33) dazu ausgebildet ist, die Häufigkeitsverteilung (25) der Abstandswerte als blickfeldabschnittsspezifische Häufigkeitsverteilung zu ermitteln, indem das Blickfeld (13) des Objektivs (15) in Abschnitte aufgeteilt wird und jeder Kombination eines der Abschnitte mit einem Abstandsbereich einer Reihe aufeinanderfolgender Abstandsbereiche als Häufigkeit die Anzahl derjenigen in diesen Abstandsbereich fallenden Abstandswerte zugeordnet wird, welche den Abstand eines in dem jeweiligen Abschnitt liegenden Szeneriepunktes von der Bewegtbildkamera (11) repräsentieren.

5. Fokuseinstellungs-Anzeigeeinheit nach zumindest einem der vorstehenden Ansprüche,
wobei die Auswerte- und Steuervorrichtung (33) dazu ausgebildet ist, die Anzeigevorrichtung (27) zum Anzeigen einer graphischen Darstellung der Häufigkeitsverteilung (25) der Abstandswerte anzusteuern, die auf einen vorgebbaren Abstandsbereich und/oder auf einen adaptiven Abstandsbereich beschränkt ist.

6. Fokuseinstellungs-Anzeigeeinheit nach zumindest einem der vorstehenden Ansprüche,
wobei die Auswerte- und Steuervorrichtung (33) dazu ausgebildet ist, die Anzeigevorrichtung (27) zum Anzeigen einer graphischen Darstellung der Häufigkeitsverteilung (25) der Abstandswerte anzusteuern, die eine gesonderte Kennzeichnung von Maxima der Häufigkeitsverteilung (25) mittels graphischer Marker umfasst.

7. Fokuseinstellungs-Anzeigeeinheit nach zumindest einem der vorstehenden Ansprüche,
ferner mit
- einem Steuersignalausgang (35) zum Ausgeben von Steuersignalen zum Verstellen der Fokusentfernung des Objektivs (15).

8. Fokuseinstellungs-Anzeigeeinheit nach Anspruch 7,
ferner mit
- einem Bedienelement (31),
wobei die Auswerte- und Steuervorrichtung (33) dazu ausgebildet ist, in Abhängigkeit von Betätigungen des Bedienelements (33) Steuersignale zum Verstellen der Fokusentfernung des Objektivs (15) an dem Steuersignalausgang (35) auszugeben.

9. Fokuseinstellungs-Anzeigeeinheit nach Anspruch 7 oder 8,
wobei die Auswerte- und Steuervorrichtung (33) dazu ausgebildet ist, in Abhängigkeit von Veränderungen der Häufigkeitsverteilung (25) der Abstandswerte Steuersignale zum Verstellen der Fokusentfernung des Objektivs (15) an dem Steuersignalausgang (35) auszugeben.

10. Fokuseinstellungs-Anzeigeeinheit nach zumindest einem der vorstehenden Ansprüche,
wobei die Anzeigevorrichtung (27) einen berührungsempfindlichen Bildschirm umfasst, der dazu ausgebildet ist, die graphische Darstellung der Fokuseinstellung (29) und die graphische Darstellung der Häufigkeitsverteilung (25) der Abstandswerte anzuzeigen sowie Berührungseingaben zu erfassen.

11. Fokuseinstellungs-System für eine Bewegtbildkamera, mit
- einer Fokuseinstellungs-Anzeigeeinheit (21) nach zumindest einem der vorstehenden Ansprüche und
- einem Entfernungssensor (19) zum Messen der Abstände der Vielzahl von Szeneriepunkten von der Bewegtbildkamera (11) sowie zum Ausgeben von Abstandswerten, welche die gemessenen Abstände repräsentieren, an den Dateneingang (23) der Fokuseinstellungs-Anzeigeeinheit (21).

12. Fokuseinstellungs-System nach Anspruch 11,
ferner mit
- einer Objektivantriebsvorrichtung (37), die dazu ausgebildet ist, an einem Steuersignalausgang (35) der Fokuseinstellungs-Anzeigeeinheit (21) ausgegebene Steuersignale zu empfangen und die Fokusentfernung des Objektivs (15) in Abhängigkeit von den empfangenen Steuersignalen zu verstellen.

13. Verfahren zur Vereinfachung des Fokussierens einer Bewegtbildkamera (11), welches die folgenden Schritte umfasst:
- Erfassen einer Fokuseinstellung, welche eine momentane Fokusentfernung eines Objektivs (15) der Bewegtbildkamera (11) repräsentiert;
- Messen der Abstände einer Vielzahl von Szeneriepunkten im Blickfeld (13) des Objektivs (15) von der Bewegtbildkamera (11) mittels eines Entfernungssensors (19);
**dadurch gekennzeichnet, dass** das Verfahren außerdem die folgenden Schritte umfasst:
- Ermitteln einer Häufigkeitsverteilung von Abstandswerten, welche die gemessenen Abstände repräsentieren; und
- Anzeigen einer graphischen Darstellung der Fokuseinstellung (29) sowie einer graphischen Darstellung der Häufigkeitsverteilung (25) der Abstandswerte auf einer Anzeigevorrichtung (27) in einer räumlichen Beziehung zueinander, welche das räumliche Verhältnis der momentanen Fokusentfernung des Objektivs (15) zu den Abständen der Vielzahl von Szeneriepunkten wiederspiegelt.

14. Verfahren zum Fokussieren einer Bewegtbildkamera (11), welches die Schritte des Verfahrens nach Anspruch 13 sowie außerdem die folgenden Schritte umfasst:
- Identifizieren eines charakteristischen Bereichs der Häufigkeitsverteilung (25) als repräsentativ für ein zu fokussierendes Objekt (A-F);
- Verstellen der Fokusentfernung des Objektivs (15), bis die graphische Darstellung der Fokuseinstellung (29) und die graphische Darstellung der Häufigkeitsverteilung (25) der Abstandwerte auf der Anzeigevorrichtung (27) in einer räumlichen Beziehung zueinander angezeigt werden, die einer Fokussierung des charakteristischen Bereichs entspricht.

15. Verfahren nach Anspruch 13 oder 14,
wobei das Anzeigen der graphischen Darstellung der Fokuseinstellung (29) sowie der graphischen Darstellung der Häufigkeitsverteilung (25) der Abstandswerte auf der Anzeigevorrichtung (27) umfasst, dass die Fokuseinstellung (29) und die Häufigkeitsverteilung (25) über einer gemeinsamen Achse (U) aufgetragen dargestellt werden.

## Claims

1. A focus setting display unit (21) for a moving image camera (11), comprising
- a data input (23) for receiving a focus setting which represents an instantaneous focal distance of an objective (15) of the moving image camera (11) and for receiving distance values which represent the distances of a plurality of scene points in a field of view (13) of the objective (15) from the moving image camera (11);
- a display device (27); and
- an evaluation and control device (33),
**characterized in that**
the evaluation and control device (33) is configured to control the display device (27) to display a graphical representation of the focus setting (29) and a graphical representation of a frequency distribution (25) of the distance values in a spatial relationship to one another that reflects the spatial relationship of the instantaneous focal distance of the objective (15) to the distances of the plurality of scene points.

2. A focus setting display unit in accordance with claim 1,
wherein the evaluation and control device (33) is configured to control the display device (27) to depict the focus setting and the frequency distribution arranged along a common axis (U) for the display of the graphical representation of the focus setting (29) and of the graphical representation of the frequency distribution (25) of the distance values.

3. A focus setting display unit in accordance with at least one of the preceding claims,
wherein the evaluation and control device (33) is configured to determine the frequency distribution (25) of the distance values as a uniform frequency distribution in that each distance zone of a series of consecutive distance zones has the number of all the distance values falling in this distance zone associated with it as a frequency.

4. A focus setting display unit in accordance with at least one of the preceding claims,
wherein the evaluation and control device (33) is configured to determine the frequency distribution (25) of the distance values as a frequency distribution specific to a field of view portion in that the field of view (13) of the objective (15) is divided into portions and the number of those distance values falling in this distance zone is associated as a frequency with each combination of one of the portions with a distance zone of a series of consecutive distance zones, said distance values representing the distance of a scene point disposed in the respective portion from the moving image camera (11).

5. A focus setting display unit in accordance with at least one of the preceding claims,
wherein the evaluation and control device (33) is configured to control the display device (27) to display a graphical representation of the frequency distribution (25) of the distance values that is restricted to a predefinable distance zone and/or to an adaptive distance zone.

6. A focus setting display unit in accordance with at least one of the preceding claims,
wherein the evaluation and control device (33) is configured to control the display device (27) to display a graphical representation of the frequency distribution (25) of the distance values that comprises a separate marking of maxima of the frequency distribution (25) by means of graphical markers.

7. A focus setting display unit in accordance with at least one of the preceding claims,
further comprising:
- a control signal output (35) for outputting control signals to adjust the focal distance of the objective (15).

8. A focus setting display unit in accordance with claim 7,
further comprising:
- an operating element (31),
wherein the evaluation and control device (33) is configured to output control signals to adjust the focal distance of the objective (15) at the control signal output (35) in dependence on actuations of the operating element (33).

9. A focus setting display unit in accordance with claim 7 or claim 8,
wherein the evaluation and control device (33) is configured to output control signals to adjust the focal distance of the objective (15) at the control signal output (35) in dependence on changes of the frequency distribution (25) of the distance values.

10. A focus setting display unit in accordance with at least one of the preceding claims,
wherein the display device (27) comprises a touch-sensitive screen which is configured to display the graphical representation of the focus setting (29) and the graphical representation of the frequency distribution (25) of the distance values and to detect touch inputs.

11. A focus setting system for a moving image camera, comprising
- a focus setting display unit (21) in accordance with at least one of the preceding claims; and
- a distance sensor (19) for measuring the distances of the plurality of scene points from the moving image camera (11) and for outputting distance values which represent the measured distances to the data input (23) of the focus setting display unit (21).

12. A focus setting system in accordance with claim 11,
further comprising:
- an objective drive apparatus (37) which is configured to receive control signals output at a control signal output (35) of the focus setting display unit (21) and to adjust the focal distance of the objective (15) in dependence on the received control signals.

13. A method of simplifying the focusing of a moving image camera (11), said method comprising the following steps:
- detecting a focus setting which represents an instantaneous focal distance of an objective (15) of the moving image camera (11);
- measuring the distances of a plurality of scene points in a field of view (13) of the objective (15) from the moving image camera (11) by means of a distance sensor (19),
**characterized in that** the method additionally comprises the following steps:
- determining a frequency distribution of distance values which represent the measured distances; and
- displaying a graphical representation of the focus setting (29) and a graphical representation of the frequency distribution (25) of the distance values on a display device (27) in a spatial relationship to one another that reflects the spatial relationship of the instantaneous focal distance of the objective (15) to the distances of the plurality of scene points.

14. A method of focusing a moving image camera (11), said method comprising the steps of the method in accordance with claim 13 and additionally the following steps:
- identifying a characteristic zone of the frequency distribution (25) as representative for an object (A-F) to be focused; and
- adjusting the focal distance of the objective (15) until the graphical representation of the focus setting (29) and the graphical representation of the frequency distribution (25) of the distance values on the display device (27) are displayed in a spatial relationship to one another that corresponds to a focusing of the characteristic zone.

15. A method in accordance with claim 13 or claim 14,
wherein the display of the graphical representation of the focus setting (25) and of the graphical representation of the frequency distribution (25) of the distance values on the display device (27) comprises depicting the focus setting (29) and the frequency distribution (25) arranged along a common axis (U).

## Revendications

1. Unité (21) d'affichage du réglage de la mise au point pour une caméra à images animées (11), comprenant
- une entrée de données (23) pour recevoir un réglage de la mise au point qui représente une distance de mise au point momentanée d'un objectif (15) de la caméra à images animées (11), ainsi que pour recevoir des valeurs de distance qui représentent les distances d'une multitude de points de la scène dans le champ de vision (13) de l'objectif (15) par rapport à la caméra à images animées (11),
- un dispositif d'affichage (27) et
- un dispositif d'évaluation et de commande (33),
**caractérisée en ce que**
le dispositif d'évaluation et de commande (33) est réalisé pour commander le dispositif d'affichage (27) de manière à afficher une illustration graphique du réglage de la mise au point (29) ainsi qu'une illustration graphique d'une distribution des fréquences (25) des valeurs de distance selon une relation spatiale mutuelle qui reflète le rapport spatial de la distance de mise au point momentanée de l'objectif (15) sur les distances de la multitude de points de la scène.

2. Unité d'affichage du réglage de la mise au point selon la revendication 1, dans laquelle, afin d'afficher l'illustration graphique du réglage de la mise au point (29) ainsi que l'illustration graphique de la distribution des fréquences (25) des valeurs de distance, le dispositif d'évaluation et de commande (33) est réalisé pour commander le dispositif d'affichage (27) de manière à illustrer le réglage de la mise au point et la distribution des fréquences en étant représentés sur un axe commun (U).

3. Unité d'affichage du réglage de la mise au point selon l'une au moins des revendications précédentes,
dans laquelle le dispositif d'évaluation et de commande (33) est réalisé pour déterminer la distribution des fréquences (25) des valeurs de distance sous la forme d'une distribution des fréquences uniforme, en attribuant à chaque plage de distance d'une série de plages de distance successives, en tant que fréquence, le nombre de toutes les valeurs de distance tombant dans cette plage de distance.

4. Unité d'affichage du réglage de la mise au point selon l'une au moins des revendications précédentes,
dans laquelle le dispositif d'évaluation et de commande (33) est réalisé pour déterminer la distribution des fréquences (25) des valeurs de distance en tant que distribution des fréquences spécifique à la section de champ de vision, en divisant le champ de vision (13) de l'objectif (15) en sections et en attribuant à chaque combinaison de l'une des sections avec une plage de distance d'une série de plages de distance successives, en tant que fréquence, le nombre des valeurs de distance tombant dans cette plage de distance, qui représentent la distance d'un point de scène situé dans la section respective par rapport à la caméra à images animées (11).

5. Unité d'affichage du réglage de la mise au point selon l'une au moins des revendications précédentes,
dans laquelle le dispositif d'évaluation et de commande (33) est réalisé pour commander le dispositif d'affichage (27) de manière à afficher une illustration graphique de la distribution des fréquences (25) des valeurs de distance, qui est limitée à une plage de distance prédéfinissable et/ou à une plage de distance adaptative.

6. Unité d'affichage du réglage de la mise au point selon l'une au moins des revendications précédentes,
dans laquelle le dispositif d'évaluation et de commande (33) est réalisé pour commander le dispositif d'affichage (27) de manière à afficher une illustration graphique de la distribution des fréquences (25) des valeurs de distance, qui inclut une identification distincte des maximums de la distribution des fréquences (25) au moyen de marqueurs graphiques.

7. Unité d'affichage du réglage de la mise au point selon l'une au moins des revendications précédentes,
comprenant en outre
- une sortie de signaux de commande (35) pour émettre des signaux de commande afin d'ajuster la distance de mise au point de l'objectif (15).

8. Unité d'affichage du réglage de la mise au point selon la revendication 7, comprenant en outre
- un élément de manœuvre (31),
le dispositif d'évaluation et de commande (33) étant réalisé pour émettre à la sortie de signaux de commande (35), en fonction des actionnements de l'élément de manœuvre (33), des signaux de commande pour ajuster la distance de mise au point de l'objectif (15).

9. Unité d'affichage du réglage de la mise au point selon la revendication 7 ou 8,
dans laquelle le dispositif d'évaluation et de commande (33) est réalisé pour émettre à la sortie de signaux de commande (35), en fonction des modifications de la distribution des fréquences (25) des valeurs de distance, des signaux de commande pour ajuster la distance de mise au point de l'objectif (15).

10. Unité d'affichage du réglage de la mise au point selon l'une au moins des revendications précédentes,
dans laquelle le dispositif d'affichage (27) comprend un écran tactile réalisé pour afficher l'illustration graphique du réglage de la mise au point (29) et l'illustration graphique de la distribution des fréquences (25) des valeurs de distance, et pour saisir les entrées tactiles.

11. Système de réglage de la mise au point pour une caméra à images animées, comprenant
- une unité (21) d'affichage du réglage de la mise au point selon l'une au moins des revendications précédentes et
- un capteur de distance (19) pour mesurer les distances de la multitude de points de la scène par rapport à la caméra à images animées (11) et pour émettre des valeurs de distance, représentant les distances mesurées, à l'entrée de données (23) de l'unité (21) d'affichage du réglage de la mise au point.

12. Système de réglage de la mise au point selon la revendication 11, comprenant en outre
- un dispositif d'entraînement d'objectif (37) réalisé pour recevoir des signaux de commande, émis à une sortie de signaux de commande (35) de l'unité (21) d'affichage du réglage de la mise au point, et pour ajuster la distance de mise au point de l'objectif (15) en fonction des signaux de commande reçus.

13. Procédé pour faciliter la mise au point d'une caméra à images animées (11), comprenant les étapes suivantes consistant à :
- saisir un réglage de la mise au point représentant une distance de mise au point momentanée d'un objectif (15) de la caméra à images animées (11) ;
- mesurer les distances d'une multitude de points de la scène dans le champ de vision (13) de l'objectif (15) par rapport à la caméra à images animées (11) au moyen d'un capteur de distance (19) ;
**caractérisé en ce que** le procédé comprend en outre les étapes suivantes consistant à :
- déterminer une distribution des fréquences des valeurs de distance représentant les distances mesurées ; et
- afficher sur un dispositif d'affichage (27) une illustration graphique du réglage de la mise au point (29) ainsi qu'une illustration graphique de la distribution des fréquences (25) des valeurs de distance selon une relation spatiale mutuelle qui reflète le rapport spatial de la distance de mise au point momentanée de l'objectif (15) sur les distances de la multitude de points de la scène.

14. Procédé de mise au point d'une caméra à images animées (11), comprenant les étapes du procédé selon la revendication 13 et comprenant en outre les étapes suivantes consistant à :
- identifier une plage caractéristique de la distribution des fréquences (25) comme étant représentative d'un objet (A-F) à mettre au point ;
- ajuster la distance de mise au point de l'objectif (15) jusqu'à ce que l'illustration graphique du réglage de la mise au point (29) et l'illustration graphique de la distribution des fréquences (25) des valeurs de distance soient affichées sur le dispositif d'affichage (27) selon une relation spatiale mutuelle qui correspond à une mise au point de la plage caractéristique.

15. Procédé selon la revendication 13 ou 14,
dans lequel l'affichage sur le dispositif d'affichage (27) de l'illustration graphique du réglage de la mise au point (29) ainsi que de l'illustration graphique de la distribution des fréquences (25) des valeurs de distance inclut le fait que le réglage de la mise au point (29) et la distribution des fréquences (25) sont illustrés en étant représentés sur un axe commun (U).
